# EUROPEAN PATENT SPECIFICATION

(11) **EP 2 846 114 B1**
(45) Date of publication and mention of the grant of the patent: **02.11.2016**
(21) Application number: 14183547.0
(22) Date of filing: 04.09.2014
(51) Int. Cl.: F25B 49/02, F25D 21/14

(54) **Refrigerator and control method thereof**
Kühlschrank und Steuerungsverfahren dafür
Réfrigérateur et son procédé de commande

(30) Priority: 05.09.2013 KR 20130106478; 05.09.2013 KR 20130106479; 08.07.2014 KR 20140085253
(43) Date of publication of application: 11.03.2015
(73) Proprietor: LG Electronics Inc., Seoul 150-721 (KR)
(72) Inventor: KIM, Hosan, 153-802 Seoul (KR); LEE, Jangseok, 153-802 Seoul (KR); SUH, Yonghun, 153-802 Seoul (KR); JHEE, Sung, 153-802 Seoul (KR); LIM, Hyoungkeun, 153-802 Seoul (KR)
(74) Representative: Vossius & Partner Patentanwälte Rechtsanwälte mbB

(56) References cited:
- WO-A1-2008/100255
- WO-A2-2011/112500
- JP-A- H 102 625
- JP-A- 2005 098 627
- US-A1- 2011 030 402

## Description

### BACKGROUND

The present disclosure relates to a refrigerator and a control method thereof.

In general, a refrigerator has a plurality of storage compartments for accommodating foods to be stored so as to store the foods in a frozen or refrigerated state. Also, one surface of the storage compartment may be opened to accommodate or dispense the foods. The plurality of storage compartments include a freezing compartment for storing foods in the frozen state and a refrigerating compartment for storing foods in the refrigerated state.

A refrigeration system in which a refrigerant is circulated is driven in the refrigerator. The refrigeration system may include a compressor, a condenser, an expansion device, and an evaporator. The evaporator may include a first evaporator disposed at a side of the refrigeration compartment and a second evaporator disposed at a side of the freezing compartment.

Cool air stored in the refrigerating compartment may be cooled while passing through the first evaporator, and the cooled cool air may be supplied again into the refrigerating compartment. Also, the cool air stored in the freezing compartment may be cooled while passing through the second evaporator, and the cooled cool air may be supplied again into the freezing compartment.

As described above, in the refrigerator according to the related art, independent cooling may be performed in the plurality of storage compartments through separate evaporators. In relation to the refrigerator, this applicant has been registered with Patent Registration No. 10-1275184 (Registration Date: June 10, 2013), KR 20080103857.

According to the prior patent, the refrigerant may be selectively supplied into the first or second evaporator 110 or 120 to cool one storage compartment of the plurality of storage compartments and stop cooling of other storage compartments.

As described above, according to the related art, the plurality of storage compartments may not be cooled at the same time, but be selectively or alternately cooled. In this case, although the storage compartment in which the cooling is performed is maintained to an adequate temperature, the storage compartment in which the cooling is not performed may increase in temperature and thus be beyond a normal temperature range.

Also, in a state where the cooling of one storage compartment is required, if it is determined that the other storage compartment is beyond the normal temperature range, the other storage compartment may be not immediately cooled. As a result, in the structure in which the storage compartments are independently cooled, the cool air is not supplied at a suitable time and place to deteriorate operation efficiency of the refrigerator.

The refrigerator includes a machine room in which a portion of the parts constituting the refrigeration system is disposed. In detail, the compressor, the condenser, and a condensing fan disposed on a side of the condenser to blow air may be disposed in the machine room. The air flowing by the condensing fan may perform heat exchange (cooling) in the condenser and cool the compressor.

In relation to the constitutions within the machine room, this applicant applied for a patent (hereinafter, referred to as a prior application) (Patent Application No. 10-2008-0122241 (filing date: December 4, 2008), KR 20100063882.

In recent, the refrigerator having a relatively large storage compartment may have a large influence on customer's product purchasing. Thus, there is a lot of interest in technology for reducing a volume of the machine room so as to increase the volume of the storage compartment. JP 2005 098627 discloses a refrigerator according to the preamble of claim 1.

However, in the refrigerator according to the related art, when the condensing fan decreases in size to reduce a height of the machine room, it ma be difficult to generate a sufficient air flow, thereby deteriorating heat-exchange efficiency of the condenser.

Also, when the condensing fan increases in rotation number to generate the sufficient air flow, an inner pressure of the machine room may abnormally increase to cause an increase of noises.

The above problems are solved by a refrigerator according to claim 1 and by a method according to claim 8.

### SUMMARY

A refrigerator is provided that is capable of improving heat-exchange efficiency while reducing a volume of a machine room and efficiently performing cooling with respect to a plurality of storage compartments and a control method thereof.

Preferably a refrigerator includes: a machine room defined in one side of a storage compartment; a base defining a bottom surface of the machine room; a compressor seated on the base to compress a refrigerant; a condenser condensing a refrigerant compressed in the compressor, the condenser being disposed on one side of the compressor; a drain pan disposed on the base to store condensed water generated in the condenser; and a fan assembly coupled to the base to generate an air flow within the machine room, wherein the fan assembly includes a plurality of condensation fans.

The fan assembly may be spaced a preset distance outward from the drain pan.

The preset distance may range from about 20 mm to about 40 mm.

The fan assembly may include: a first condensation fan; a second condensation fan coupled to one side of the first condensation fan; and a housing disposed to surround the first and second condensation fans, the housing being coupled to a top surface of the base.

A width of the fan assembly in one direction may be greater than that of the condenser in one direction, and the first and second condensation fans may be disposed on one side of the condenser in parallel to each other.

The first and second condensation fans may be disposed on one side of the condenser in parallel to each other.

The compressor may include a first compressor primarily compressing the refrigerant and a second compressor additionally compressing the refrigerant compressed in the first compressor, the first compressor and one condensation fan of the plurality of condensation fans may form one row, and the second compressor and the other condensation fan of the plurality of condensation fans may form the other row.

The fan assembly may be disposed between the compressor and the condenser.

The refrigerator may further include a control unit for applying an electrical signal to allow the plurality of condensation fans to be turned on/off at the same time, and the control unit may control a duty value that defines a pulse value applied into the plurality of condensation fans.

The refrigerator may further include a rotation number detection unit detecting a rotation number of each of the plurality of condensation fans to feedback information with respect to the detected rotation number into the control unit, wherein the control unit may control the rotation number of each of the plurality of condensation fans so that the rotation numbers accord to each other on the basis of the information transmitted into the rotation number detection unit.

The control unit may input a preset duty value into the plurality of condensation fans, when the plurality of condensation fans have the same rotation number, or a difference between the rotation numbers of the plurality of condensation fans is within a preset value, the preset duty value may be maintained, and when the difference between the rotation numbers of the plurality of condensation fans is above the preset value, the duty value of the condensation fan having a lower rotation number may be changed.

The refrigerator may further include: a plurality of evaporators including first and second evaporators for evaporating the refrigerant; a plurality of evaporation fans including first and second evaporation fans that are respectively disposed on one sides of the first and second evaporators; a plurality of temperature sensors detecting refrigerant inlet/outlet temperatures of the first and second evaporators; and a control unit recognizes whether the refrigerant is concentrated into one side of the first or second evaporator on the basis of at least one information of the information with respect to the refrigerant inlet/outlet temperatures of the first evaporator and the information with respect to the refrigerant inlet/outlet temperatures of the second evaporator.

The control unit may reduce the rotation number of the second evaporation fan to increase or maintain the rotation number of the first evaporation fan when the refrigeration concentration into the first evaporator is recognized.

A method is also provided for controlling a refrigerator including a compressor, a condenser, an expansion devices, and first and second evaporators includes: operating the compressor; applying a preset pulse value into a plurality of condensation fans for blowing air into the condenser to operate the plurality of condensation fans at the same time; detecting a rotation number of each of the plurality of condensation fans; and maintaining or changing the preset pulse value on the basis of whether a difference between the rotation numbers of the plurality of condensation fans is above a preset value.

The operating of the plurality of condensation fans at the same time may include applying the same pulse value into the plurality of condensation fans.

The maintaining or changing of the preset pulse value may include: maintaining the preset pulse value when the rotation numbers of the plurality of condensation fans are the same, or the difference between the rotation numbers of the plurality of condensation fans is within the preset value, and changing the preset pulse value when the difference between the rotation numbers of the plurality of condensation fans is above the preset value.

The pulse value applied into the condensation fan having a lower rotation number of the plurality of condensation fans may increase.

The method may further include: operating a first evaporation fan disposed on one side of the first evaporator and a second evaporation fan disposed on one side of the second evaporator at a preset rate to supply cool air into a refrigerating compartment and a freezing compartment; and changing an operation rate of the first or second evaporation fan on the basis of whether concentration of a refrigerant into the first or second evaporator occurs.

The refrigerant may be branched into the first and second evaporators to flow, and the changing of the operation rate may include decreasing the operation rate of the second evaporation fan and maintaining or increasing the operation rate of the first evaporation fan when the concentration of the refrigerant into the first evaporator occurs.

The operating of the first and second evaporation fans at the preset rate may include: operating the first evaporation fan at a middle or high rate; and operating the second evaporation fan at the middle rate, wherein, when the concentration of the refrigerant into the first evaporator occurs, the second evaporation fan may operate at a low rate, and the first evaporation fan may operate at the middle or high rate.

The details are set forth in the accompanying drawings and the description below. Other features will be apparent from the description and drawings, and from the claims.

### BRIEF DESCRIPTION OF THE DRAWINGS

Fig. 1 is a view illustrating a system having constitutions of a refrigerator according to a first embodiment.
Fig. 2 is a perspective view illustrating a machine room of the refrigerator according to the first embodiment.
Fig. 3 is a front view illustrating the machine room of the refrigerator according to the first embodiment.
Fig. 4 is a graph illustrating a variation in noise and flow rate depending on a distance spaced between a condensing fan and a drain pan according to the first embodiment.
Fig. 5 is a block diagram of the refrigerator according to the first embodiment.
Fig. 6 is a flowchart illustrating a method for controlling the refrigerator according to the first embodiment.
Fig. 7 is a view illustrating a system having a refrigeration cycle in a refrigerator according to a second embodiment.
Fig. 8 is a block diagram illustrating constitutions of the refrigerator according to the second embodiment.
Figs. 9 and 10 are flowcharts illustrating a method for controlling the refrigerator according to the second embodiment.
Figs. 11 and 12 are flowcharts illustrating a method for controlling a refrigerator according to a third embodiment.
Fig. 13 is a view illustrating a system having a refrigeration cycle in a refrigerator according to a fourth embodiment.
Figs. 14 and 15 are flowcharts illustrating a method for controlling the refrigerator according to the fourth embodiment.
Fig. 16 is a view illustrating a system having a refrigeration cycle in a refrigerator according to a fifth embodiment.
Figs. 17 and 18 are flowcharts illustrating a method for controlling the refrigerator according to the fifth embodiment.

### DETAILED DESCRIPTION OF THE EMBODIMENTS

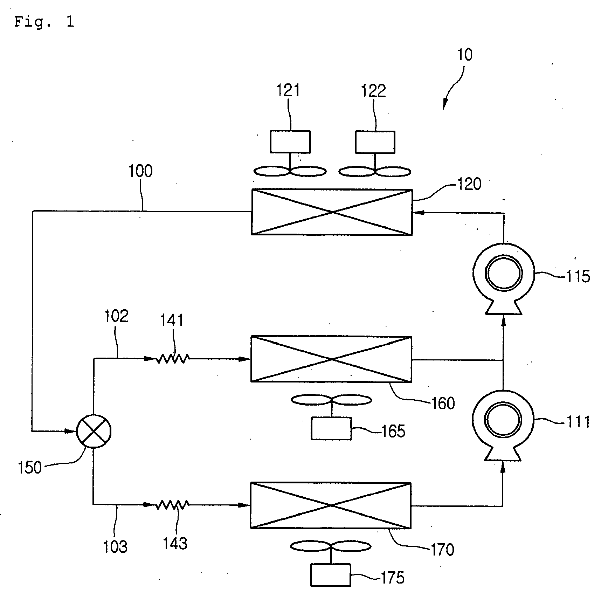

Fig. 1 is a view illustrating a system having constitutions of a refrigerator according to a first embodiment.

Referring to Fig. 1, a refrigerator 10 according to a first embodiment includes a plurality of devices for driving a refrigeration cycle.

In detail, the refrigerator 10 includes a plurality of compressors 111 and 115 for compressing a refrigerant, a condenser 120 for condensing the refrigerant compressed in the plurality of compressors 111 and 115, a plurality of expansion devices 141 and 143 for decompressing the refrigerant condensed in the condenser 120, and a plurality of evaporators 160 and 170 for evaporating the refrigerant decompressed in the plurality of expansion devices 141 and 143.

Also, the refrigerator 10 includes a refrigerant tube 100 connecting the plurality of compressors 111 and 115, the condenser 120, the expansion devices 141 and 143, and the evaporators 160 and 170 to each other to guide a flow of the refrigerant.

The plurality of compressors 111 and 115 include a first compressor 111 disposed at a low-pressure side to primarily compress the refrigerant and a second compressor 115 for additionally compressing the refrigerant compressed in the first compressor 111.

The first compressor 111 and the second compressor 115 are connected to each other in series. That is, an outlet-side refrigerant tube of the first compressor 111 is connected to an inlet-side of the second compressor 115.

The plurality of evaporators 160 and 170 includes a first evaporator 160 for generating cool air to be supplied into one storage compartment of a refrigerating compartment and a freezing compartment and a second evaporator 170 for generating cool air to be supplied into the other storage compartment.

For example, the first evaporator 160 may generate cold air to be supplied into the refrigerating compartment and be disposed on one side of the refrigerating compartment. Also, the second evaporator 170 may generate cold air to be supplied into the freezing compartment and be disposed on one side of the freezing compartment.

The cool air to be supplied into the freezing compartment may have a temperature less than that of the cool air to be supplied into the refrigerating compartment. Thus, a refrigerant evaporation pressure of the second evaporator 170 may be less than that of the first evaporator 160.

An outlet-side refrigerant tube 100 of the second evaporator 170 may extend to an inlet-side of the first compressor 111. Thus, the refrigerant passing through the second evaporator 170 may be introduced into the first compressor 111.

The outlet-side refrigerant tube 100 of the first evaporator 160 may be connected to the outlet-side refrigerant tube of the first compressor 111. Thus, the refrigerant passing through the first evaporator 160 may be mixed with the refrigerant compressed in the first compressor 111, and then the mixture may be suctioned into the second compressor 115.

The plurality of expansion devices 141 and 143 include a first expansion device 141 for expanding the refrigerant to be introduced into the first evaporator 160 and a second expansion device 170 for expanding the refrigerant to be introduced into the second evaporator 170. Each of the first and second expansion devices 141 and 143 may include a capillary tube.

The capillary tube of the second expansion device 143 may have a diameter less than that of the capillary tube of each of the first expansion device 141 so that a refrigerant evaporation pressure of the second evaporator 170 is less than that of the first evaporator 160.

A first refrigerant passage 102 for guiding the introduction of the refrigerant into the first evaporator 160 may be defined in the inlet-side of the first evaporator 160. The first expansion device 141 may be disposed in the first refrigerant passage 102. The first refrigerant passage 102 may be called a "first evaporation passage" in that the first refrigerant passage 102 guides the introduction of the refrigerant into the first evaporator 160.

Also, a second refrigerant passage 103 for guiding the introduction of the refrigerant into the second evaporator 170 is defined in the inlet-side of the second evaporator 170. The second expansion device 143 may be disposed in the second refrigerant passage 103. The second refrigerant passage 103 may be called a "second evaporation passage" in that the second refrigerant passage 103 guides the introduction of the refrigerant into the second evaporator 170. The first and second refrigerant passages 102 and 103 may be understood as "branch passages" that are branched from the refrigerant tube 100.

The refrigerator 10 may further include a flow adjusting unit 150 for branching and introducing the refrigerant into the first and second refrigerant passages 102 and 103. The flow adjusting unit 150 may be understood as a device for simultaneously or alternately operating the first and second evaporators 160 and 170, i.e., for adjusting a flow of the refrigerant so that the refrigerant is simultaneously or alternately introduced into the first and second evaporators 160 and 170.

The flow adjusting unit 150 includes a three-way valve having one inflow part through which the refrigerant is introduced and two discharge parts through which the refrigerant is discharged.

The first and second refrigerant passages 102 and 103 are connected to the two discharge parts of the flow adjusting unit 150. Thus, the refrigerant passing through the flow adjusting unit 150 may be branched and discharged into the first and second refrigerant passages 102 and 103. The discharge parts connected to the first and second refrigerant passages 102 and 103 may be called a "first discharge part" and a "second discharge part", respectivley.

The refrigerator 10 includes a first evaporation fan 165 disposed on one side of the first evaporator 160 and a second evaporation fan 175 disposed on one side of the second evaporator 170.

Heat-exchange performance of the first and second evaporators 160 and 170 may vary according to rotation rates of the first and second evaporation fans 165 and 175.

The refrigerator 10 further includes a plurality of condensing fans 121 and 122 disposed on one side of the condenser 120 to generate an air flow. The plurality of condensing fans 121 and 122 may be disposed in parallel to each other and be configured to allow air to flow from the outside into the condenser 120.

The first and second compressor 111 and 115, the condenser 120, and the plurality of condensing fans 121 and 122 may be disposed in the machine room of the refrigerator. For example, the machine room may be defined in a rear lower portion of the main body of the refrigerator in which the storage compartment is defined. Hereinafter, the machine room will be described with reference to the accompanying drawings.

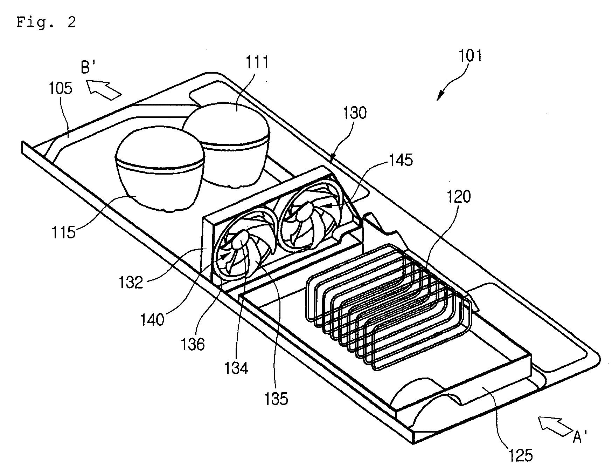

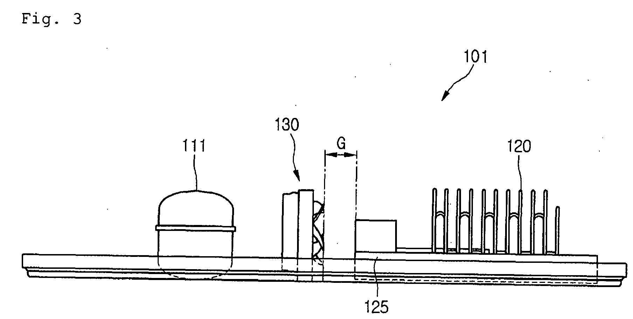

Fig. 2 is a perspective view illustrating a machine room of the refrigerator according to the first embodiment, and Fig. 3 is a front view illustrating the machine room of the refrigerator according to the first embodiment.

Referring to Fig. 2, a base defining a bottom surface of the machine room 105, the plurality of compressors 111 and 115 seated on the base 105, the condenser 120 for condensing the refrigerator compressed in the plurality of compressors 111 and 115, and a fan assembly 130 for generating an air flow toward the condenser 120 are disposed in the machine room 101 of the refrigerator according to the first embodiment.

The plurality of compressors 111 and 115 and the condenser 120 may be disposed on both sides of the fan assembly 130. That is, the fan assembly 130 may be disposed between the plurality of compressors 111 and 115 and the condenser 120.

The fan assembly 130 may be disposed on the base 105. That is, the bottom surface of the fan assembly 130 may be coupled to a top surface of the base 105, and the fan assembly 130 may extend upward from the base 105.

Also, a drain pan 125 in which condensed water generated in the condenser 120 is stored may be further disposed on the base 105. The drain pan 125 may be disposed under the condenser 120, and a lower portion of the condenser 120 may be accommodated into the drain pan 125. Also, the fan assembly 130 may be disposed in an outer space of the drain pan 125.

Thus, since the fan assembly 130 may be disposed outside the drain pan 125 to extend upward from the base 105, the fan assembly 130 may be reduced in installation height when compared to a case in which the fan assembly is disposed within the drain pan according to the related art..

That is, when compared to the related art, the installation height of the fan assembly may be reduced by a bottom thickness of the drain pan 125. As a result, the machine room 101 accommodating the fan assembly 130 may be reduced in height.

The drain pan 125 may have sufficient capacity for storing the condensed water generated from the condenser 120. The drain pan 125 may have an approximately hexahedral shape with an opened top surface and a preset height to collect the condensed water. However, the drain pan 125 may have a height less than that of the fan assembly 130.

Also, when compared to the drain pan (see Fig. 2, reference numeral is not given) of the related art (Application No. KR10-2008-0122241), the drain pan 125 according to the current embodiment may decrease in width in a horizontal direction and increase somewhat in depth in a front/rear direction. Here, the horizontal direction and the front/rear direction may be understood as a horizontal direction and front/rear direction when viewed from a front side of the refrigerator. These directions may be equally applied to following descriptions.

Since the width of the drain pan 125 in the horizontal direction is reduced when compared to the related art, the fan assembly 130 may be disposed outside the drain pan 125 within the machine room 101 having the limited volume.

The fan assembly 130 includes the plurality of condensing fans 121 and 122. The plurality of condensing fans 121 and 122 include first and second condensing fans 121 and 122, which are disposed in parallel to each other. That is, the second condensing fan 121 may be disposed on a side of the first condensing fan 121. Thus, air suctioned into the fan assembly 130 may pass through each of the first and second condensing fans 121 and 122 and then be discharged.

Also, the first condensing fan 121 may be disposed to correspond to the first compressor 111, and the second condensing fan 122 may be disposed to correspond to the second compressor 115. That is, the first compressor 111 and the first condensing fan 121 form one row (a first row), and the second compressor 115 and the second condensing fan 122 form the other row (a second row). The first row may be disposed on a front side of the second row.

A width of the fan assembly 140 in the front/rear direction may be equal to or greater than that of the condenser 120 in the front/rear direction. That is, a front end of the fan assembly 130 may be disposed on the same line as a front end of the condenser 120 or disposed at a front side of the front end of the condenser 120. Also, a rear end of the fan assembly 130 may be disposed on the same line as a rear end of the condenser 120 or disposed at a rear side of the rear end of the condenser 120.

Thus, since an air flow region due to the operation of the fan assembly 130 covers the whole region of the condenser 120, heat-exchange performance of the condenser 120 may be improved.

Each of the first and second condensing fans 121 and 122 include a hub 134 defining a central portion of the fan, a plurality of blades 135 extending from the hub 134 in a radius direction, and a shroud 136 disposed outside ends of the plurality of blades 135 to guide the suction and discharge of the air through the blades 135.

The shroud 136 of the first condensing fan 121 and the shroud 136 of the second condensing fan 122 may be coupled to each other. That is, an outer circumferential surface of the shroud 136 of the first condensing fan 121 may be coupled to contact the shroud 136 of the second condensing fan 122.

Also, the fan assembly 130 further includes a housing 132 surrounding the first and second condensing fans 121 and 122. The housing 132 may be coupled to a top surface of the base 105. Also, the housing 132 may surround the shroud 136 of the first condensing fan 121 and the shroud 136 of the second condensing fan 140.

An air flow within the machine room 101 will now be simply described.

When the first and second condensing fans 121 and 122 operate, external air of the refrigerator may be suctioned into the machine room 101 (in a direction A'). The refrigerator 10 may include a cover member (not shown) covering the machine room 101. A suction hole through which air is introduced into the machine room 101 may be defined in the cover member. For example, the suction hole may be provided in plurality in a side and rear side of the machine room 101.

The air suctioned into the machine room 101 may cool the condenser 120 while passing through the condenser 120. A refrigerant having a temperature greater than that of the air may flow into the condenser 120.

The air passing through the condenser 120 may pass through the first and second condensing fans 121 and 122 to flow into the compressors 111 and 115. The first and second compressors 111 and 115 may be devices for compressing the refrigerator to a high temperature. Thus, the first and second compressors 111 and 115 may generate a large amount of heat. The air flowing into the machine room 101 may cool the first and second compressors 111 and 115.

The air passing through the first and second compressors 111 and 115 may be discharged to the outside of the machine room 101 (in a direction B'). A discharge hole for discharging the air within the machine room 101 to the outside may be defined in the cover member. For example, the discharge hole may be provided in plurality in a side and rear side of the machine room 101.

Referring to Fig. 3, the fan assembly 130 may be spaced a preset distance G from the drain pan 125. When the fan assembly 130 is coupled or closely attached to the drain pan 125, at least one portion of the fan assembly 130 may be covered by the drain pan 125. Thus, the air flow may be restricted. In this embodiment, the above-described limitation will be prevented.

Also, if the fan assembly 130 is not sufficiently spaced from the drain pan 125 by the preset distance, an eddy current may be generated in a space between the fan assembly 130 and the drain pan 125 to reduce an amount of air and generate noises.

Thus, to solve the above-described limitation, the current embodiment proposes a spaced distance value between the fan assembly 130 and the drain pan 125. The detailed description will be described later with reference to drawings.

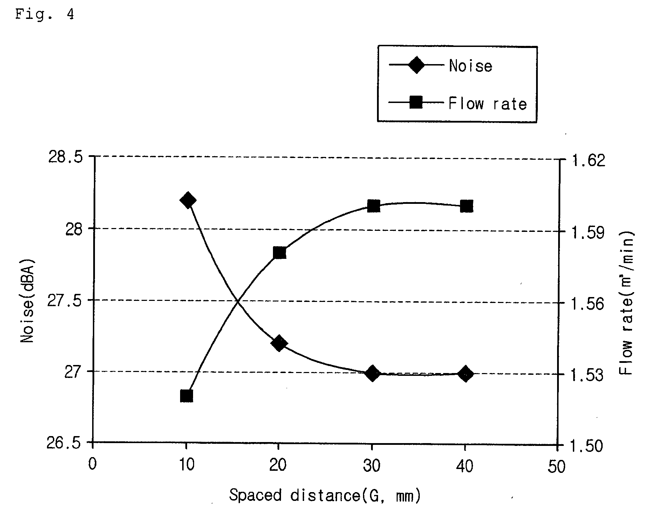

Fig. 4 is a graph illustrating a variation in noise and flow rate depending on a distance spaced between a condensing fan and a drain pan according to the first embodiment.

As described above, the fan assembly 130 and the drain pan 125 may be spaced a predetermined distance G from each other. For example, the predetermined distance G may range from about 20 mm to about 40 mm.

The eddy current may be generated through a space C spaced between the fan assembly 130 and the drain pan 125. The eddy current may be understood as a rotating air flow in the spaced space. The eddy current may reduce the amount of air and act as a noise source.

Thus, it may be important to determine the spaced distance G for reducing the occurrence of the eddy current. For example, if the spaced distance G is too short, the occurrence of the eddy current may increase. On the other hand, if the spaced distance G is too long, an unnecessary space may increase, and thus, the machine room 101 may include in volume.

Referring to Fig. 4, a flow noise (dBA) and an air flow rate (m³/min) may vary according to a variation of the spaced distance G (mm), and this may be corroborated by experiments.

For example, when the spaced distance G is about 10 mm, the flow noise may be about 28.2 dBA, and the air flow rate may be about 1.52 m³/min. Also, when the spaced distance G is about 20 mm, the flow noise may be about 27.2 dBA, and the air flow rate may be about 1.58 m³/min.

That is, it is seen that the more the spaced distance G increases within a range of about 10 mm to about 20 mm, the more the flow noise decreases, and the air flow rate increases.

When the spaced distance G is about 30 mm, the flow noise may be about 27 dBA, and the air flow rate may be about 1.60 m³/min. Also, the spaced distance G is about 40 mm, the flow noise may be about 27 dBA, and the air flow rate may be about 1.60 m³/min. This may be substantially equal to those when the spaced distance G is about 30 mm.

In summary, it is seen that the more the spaced distance G increases within a range of about 20 mm to about 30 mm, the more the flow noise decreases, and the air flow rate increases. However, a decreasing inclination of the flow noise, and an increasing inclination of the air flow rate may be less than those when the spaced distance G ranges from about 10 mm to about 20 mm.

Also, it is seen that the more the spaced distance G increases within a range of about 30 mm to about 40 mm, the more the flow noise and air flow rate are maintained constantly.

That is, when the spaced distance G is about 20 mm or more, a desired amount of air may be secured, and the noise may be reduced.

On the other hand, when the spaced distance G is too long, the space utilization of the machine room 101 may be deteriorated. Thus, while the spaced distance is maintained to a distance of about 40 mm or less, the desired amount of air and the desired noise performance may be achieved, the space utilization of the machine room may be improved. For example, the spaced distance G may be determined to a distance of about 20 mm to about 30 mm.

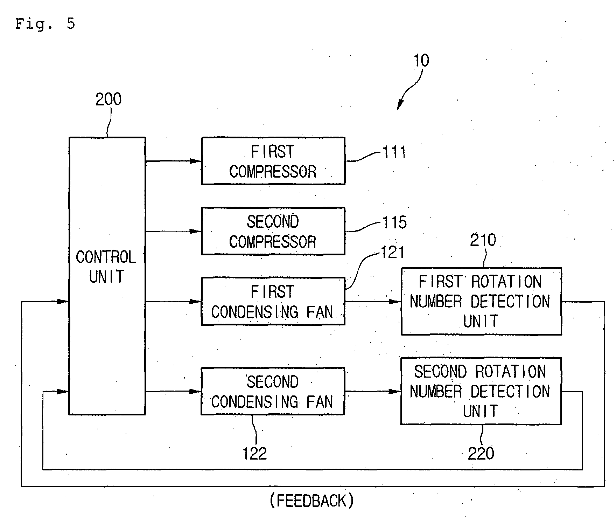

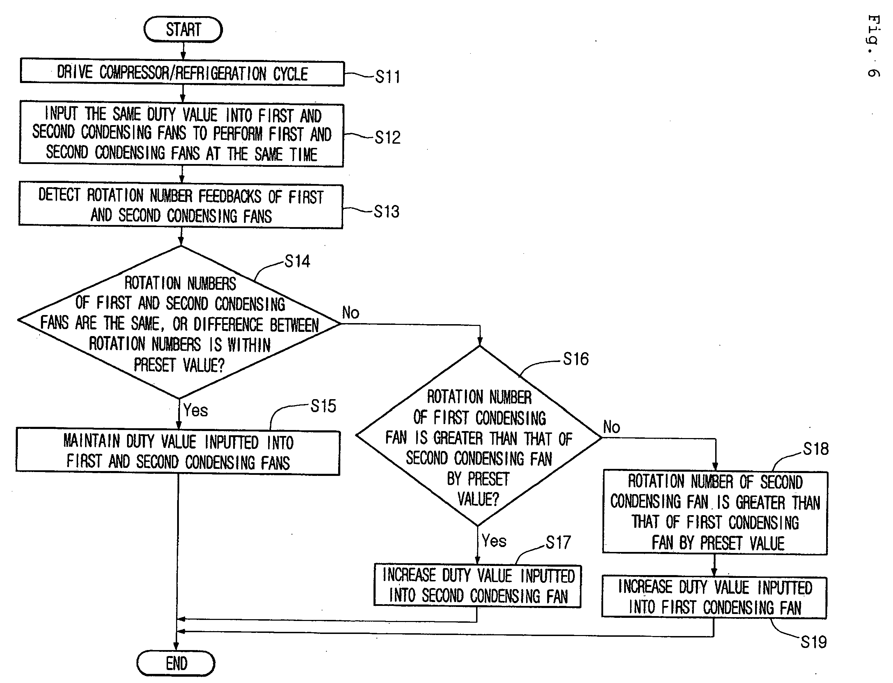

Fig. 5 is a block diagram of the refrigerator according to the first embodiment, and Fig. 6 is a flowchart illustrating a method for controlling the refrigerator according to the first embodiment.

Referring to Figs. 5 and 6, the refrigerator 10 according to the first embodiment includes the plurality of compressors 111 and 115, the plurality of condensing fans 121 and 122, and a control unit 200 controlling the compressors 111 and 115 and the condensing fans 121 and 122.

The plurality of compressors 111 and 115 include the compressor 111 and the second compressor 115. Also, the plurality of condensing fans 121 and 122 include the first condensing fan 121 and the second condensing fan 122.

The first and second condensing fans 121 and 122 may be controlled by a pulse that is an electrical signal. The control unit 200 may control a duty value that defines a pulse value applied to the first and second condensing fans 121 and 122 to rotate the first and second condensing fans 121 and 122. For example, the more the duty value increases, the pulse value increases. Thus, the rotation number of the condensing fan may increase.

Also, the control unit 200 may drive the first and second condensing fans 121 and 122 at the same time. That is, the first and second condensing fans 121 and 122 may be turned on/off at the same time.

If the first and second condensing fans 121 and 122 are alternately driven, a backflow may occur around the first and second condensing fans 121 and 122. For example, when the first condensing fan 121 operates, and the second condensing fan 122 does not operate, at least one portion of the air suctioned into the first condensing fan 121 may flow in a reverse direction through the second condensing fan 122, i.e., a backflow may occur. When the backflow occurs, air flow efficiency may be deteriorated to increase an occurrence of the noise.

Thus, in the current embodiment, the first and second condensing fans 121 and 122 may operate at the same time to prevent the backflow from occurring.

Also, the control unit 200 may control the first and second condensing fans 121 and 122 so that the rotation number of the first condensing fan 121 and the rotation number of the second condensing fan 122 accord to each other.

Theoretically, when the same duty value is inputted into the first and second condensing fans 121 and 122, the rotation numbers (RPMs) of the first and second condensing fans 121 and 122 may be the same. Alternatively, the rotation numbers of the first and second condensing fans 121 and 122 may be different according to an inner structure of the machine room 101 or a structure of a space in which the refrigerator 10 is disposed.

For example, the inner space of the machine room 101, if an air passage passing through the first condensing fan 121 and an air passage passing through the second condensing fan 122 are different in size, the rotation numbers of the plurality of condensing fans may be different from each other.

If the refrigerator 10 is disposed adjacent to one sidewall of the installation space thereof, an amount of air introduced into the machine room through the first suction hole that is defined adjacent to the sidewall may be relatively less. On the other hand, an amount of air introduced through the second suction hole spaced apart from the sidewall may be relatively large. Also, when the first condensing fan 121 is further closer to the first suction hole than the second condensing fan 122, the rotation number of the first condensing fan 121 may be less than that of the second condensing fan 122.

Thus, the control unit 200 may detect the rotation numbers of the first and second condensing fans 121 and 122 to control the first and second condensing fans 121 and 122 so that the rotation numbers of the first and second condensing fans 121 and 122 accord to each other if the rotation numbers of the first and second condensing fans 121 and 122 are different from each other.

For this, the refrigerator 10 further includes a first rotation number detection unit 210 for detecting the rotation number of the first condensing fan 121 and a second rotation number detection unit 220 for detecting the rotation number of the second condensing fan 122.

The control unit 200 may input a duty value for applying a predetermined pulse into each of the first and second condensing fans 121 and 122. Then, the control unit 200 may feedback information with respect to the rotation numbers that are recognized from the first and second rotation number detection units 210 and 220 to maintain or change the duty value.

Hereinafter, a method for controlling the refrigerator according to the current embodiment will be described.

Referring to Fig. 6, first and second compressors 111 and 115 may operate to drive a refrigeration cycle (S11).

When the refrigeration cycle is driven, first and second condensing fans 121 and 122 may operate. Here, a control unit 200 may input the same duty value into the first and second condensing fans 121 and 122 to control a pulse value for controlling each of the first and second condensing fans 121 and 122. Thus, a predetermined pulse value may be applied into each of the first and second condensing fans 121 and 122 (S12).

While the first and second condensing fans 121 and 122 operate, rotation numbers of the first and second condensing fans 121 and 122 may be detected by first and second rotation number detection units 210 and 220, respectively (S13).

Also, the control unit 200 may maintain or change the duty value inputted into the first and second condensing fans 121 and 122 on the basis of the rotation numbers.

In detail, it is recognized whether the rotation numbers of the first and second condensing fans 121 and 122 are equal to each other, or a different value between the rotation numbers is within a preset value. Here, the preset value may be determined to a value at which possibility of occurrence of noise is less even though the rotation numbers are different from each other (S14).

If the rotation numbers of the first and second condensing fans 121 and 122 are equal to each other, or the different value between the rotation numbers is within the preset value, desired performance may be outputted. Thus, the input duty value may be maintained (S15).

On the other hand, in the operation S14, when the different value between the rotation number of the first condensing fan 121 and the rotation number of the second condensing fan 122 is above the preset value, the duty value inputted in the operation S12 may be changed.

For example, if the rotation number of the first condensing fan 121 is greater by the preset value or more than that of the second condensing fan 122, the duty value inputted into the second condensing fan 122 may increase.

That is, in the operation S12, a duty value may increase to the duty value inputted into the second condensing fan 122. When the duty value inputted into the second condensing fan 122 increases, the rotation number of the second condensing fan 122 may increase to correspond to the increasing duty value (S16, S17).

On the other hand, if the rotation number of the second condensing fan 122 is greater by the preset value or more than that of the first condensing value 121, the duty value inputted into the first condensing fan 121 may increase.

That is, in the operation S12, a duty value may increase to the duty value inputted into the first condensing fan 121. When the duty value inputted into the first condensing fan 121 increases, the rotation number of the first condensing fan 121 may increase to correspond to the increasing duty value (S18, S19).

The control method according to the operations S12 to S19 may be repeatedly performed under the operation of the first and second condensing fans 121 and 122. For example, the control method in which the rotation numbers of the first and second condensing fans 121 and 122 are detected to control the duty value inputted into each of the first and second condensing fans 121 and 122 may be performed in real-time.

As described above, since the first and second condensing fans 121 and 122 operate at the same time, backflow generated when the first and second condensing fans 121 and 122 alternately operate may be prevented.

Also, since the first and second condensing fans 121 and 122 is feedback-controlled so that the first and second condensing fans 121 and 122 operate at the same rotation number, occurrence of noise generated when the first and second condensing fans 121 and 122 respectivley operate at rotation numbers different from each other may be reduced.

Hereinafter, descriptions will be made according to a second embodiment. Since the current embodiment is the same as the first embodiment except for portions of the constitutions and the control method, different parts between the first and second embodiments will be described principally, and descriptions of the same or similar parts will be denoted by the same reference numerals and descriptions of the first embodiment.

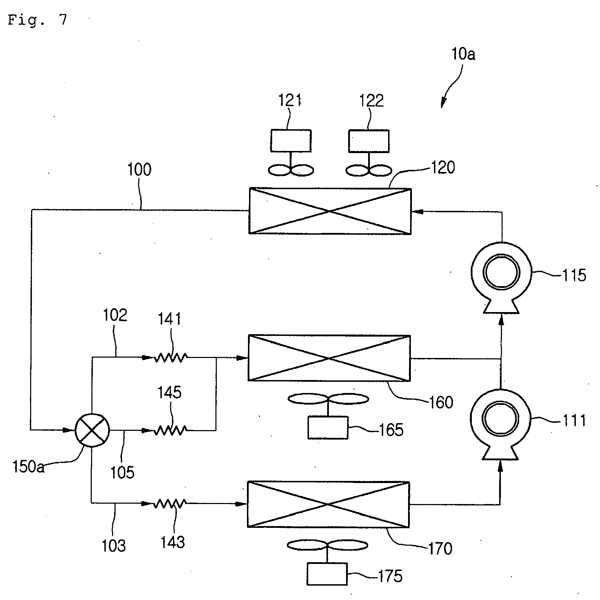

Fig. 7 is a view illustrating a system having a refrigeration cycle in a refrigerator according to a second embodiment.

Referring to Fig. 7, a refrigerator 10a according to a second embodiment includes a plurality of devices for driving a refrigeration cycle.

In detail, the refrigerator 10a includes a plurality of compressors 111 and 115 for compressing a refrigerant, a condenser 120 for condensing the refrigerant compressed in the plurality of compressors 111 and 115, a plurality of expansion devices 141, 143, and 145 for decompressing the refrigerant condensed in the condenser 120, and a plurality of evaporators 160 and 170 for evaporating the refrigerant decompressed in the plurality of expansion devices 141, 143, and 145.

Also, the refrigerator 10a includes a refrigerant tube 100 connecting the plurality of compressors 111 and 115, the condenser 120, the expansion devices 141, 143, and 145, and the evaporators 160 and 170 to each other to guide a flow of the refrigerant.

The plurality of compressors 111 and 115 include a first compressor 111 disposed at a low-pressure side and a second compressor 115 for further compressing the refrigerant compressed in the first compressor 111.

The plurality of evaporators 160 and 170 includes a first evaporator 160 for generating cool air to be supplied into one storage compartment of a refrigerating compartment and a freezing compartment and a second evaporator 170 for generating cool air to be supplied into the other storage compartment.

Descriptions with respect to the plurality of compressors 111 and 115 and the plurality of evaporators 160 and 170 will be denoted by those in the first embodiment.

The plurality of expansion devices 141, 143, and 145 include first and third expansion devices 141 and 145 for expanding the refrigerant to be introduced into the first evaporator 160 and a second expansion device 143 for expanding the refrigerant to be introduced into the second evaporator 170. Each of the first to third expansion devices 141, 143, and 145 may include a capillary tube.

For example, the capillary tube of the second expansion device 143 may have a diameter less than that of the capillary tube of each of the first and third expansion devices 141 and 145 so that a refrigerant evaporation pressure of the second evaporator 170 is less than that of the first evaporator 160.

A plurality of refrigerant passages 102 and 105 for guiding the introduction of the refrigerant into the first evaporator 160 may be defined in the inlet-side of the first evaporator 160.

The plurality of refrigerant passages 102 and 105 include a first refrigerant passage 102 in which the first expansion device 141 is disposed and a third refrigerant passage 105 in which the third expansion device 145 is disposed. The first and third refrigerant passages 102 and 105 may be called "first evaporation passages" in that the first and third refrigerant passages 102 and 105 guide the introduction of the refrigerant into the first evaporator 160. The refrigerants flowing into the first and third refrigerant passages 102 and 105 may be mixed with each other and then be introduced into the first evaporator 160.

One refrigerant passage 103 for guiding the introduction of the refrigerant into the second evaporator 170 may be defined in the inlet-side of the second evaporator 170. The one refrigerant passage 103 may include the second refrigerant passage 103 in which the second expansion device 143 is disposed. The second refrigerant passage 103 may be called a "second evaporation passage" in that the second refrigerant passage 103 guides the introduction of the refrigerant into the second evaporator 170.

The first to third refrigerant passages 102, 103, and 105 may be understood as "branch passages" that are branched from the refrigerant tube 100.

The refrigerator 10a may further include a flow adjusting unit 150a for branching and introducing the refrigerant into the first to third refrigerant passages 102, 103, and 105. The flow adjusting unit 150a may be understood as a device for operating the first and second evaporators 160 and 170 at the same time, i.e., for adjusting a flow of the refrigerant so that the refrigerant is introduced into the first and second evaporators 160 and 170 at the same time.

The flow adjusting unit 150a includes a four-way valve having one inflow part through which the refrigerant is introduced and three discharge parts through which the refrigerant is discharged.

The three discharge parts of the flow adjusting unit 150a are connected to the first to third refrigerant passages 102, 103, and 105, respectivley. Thus, the refrigerant passing through the flow adjusting unit 150a may be branched and discharged into the first to third refrigerant passages 102, 103, and 105. The discharge parts connected to the first to third refrigerant passages 102, 103, and 105 may be called a "first discharge part", a "second discharge part", and a "third discharge part" in order.

At least one discharge part of the first to third discharge parts may be opened. When all of the first to third discharge parts are opened, the refrigerant may flow through the first to third refrigerant passages 102, 103, and 105. On the other hand, when the first and second discharge parts are opened, and the third discharge part is closed, the refrigerant may flow through the first and second refrigerant passages 102 and 103.

As described above, a flow path of the refrigerant may vary according to the control of the flow adjusting unit 150a. Also, the control of the flow adjusting unit 150a may be performed on the basis of whether the refrigerant within the first or second evaporator 160 or 170 is excessive or lacking or is concentrated in one side.

For example, when the first and second evaporators 160 and 170 operate at the same time, if the refrigerant within the first evaporator 160 is relatively lacking, i.e., the refrigerant is concentrated in one side, the flow adjusting unit 150a may be controlled so that the refrigerant flows into the first to third refrigerant passages 102, 103, and 105.

On the other hand, if the refrigerant within the second evaporator 170 is relatively lacking, i.e., the concentration of the refrigerant occurs in the first evaporator 160, the refrigerant passage 150a may be controlled so that the third refrigerant passage 105 is closed, and the refrigerant flows into the first and second refrigerant passages 102 and 103.

That is, the flow passages 102 and 105 of the refrigerant to be introduced into the first evaporator 160 may be provided in plurality, and the flow of the refrigerant may be selectively controlled through the plurality of flow passages 102 and 105 to adjust an amount of refrigerant to be introduced into the first or second evaporator 160 or 170.

Since a more amount of refrigerant flows into the inlet-side of the first evaporator 160 than the inlet-side of the second evaporator 170, when all of the first to third refrigerant passages 102, 103, and 105 are opened, a relatively large amount of refrigerant may flow into the first evaporator 160 than the second evaporator 170.

That is, heat-exchange performance of the first evaporator 160 may be greater than that of the second evaporator 170. Thus, when the first evaporator 160 corresponds to the refrigerating compartment-side evaporator, and the second evaporator 170 corresponds to the freezing compartment-side evaporator, a cooling load or capacity of the refrigerating compartment may be greater than of the freezing compartment.

The refrigerator 10a includes a plurality condensing fans 121, 122, provided on one side of the heat exchanger to blow air. The plurality of condensing fans 121, 122, includes a first condensation fan 121 provided on one side of the condenser 120, a first evaporation fan 165 provided on one side of the first evaporator 160, and a second evaporation fan 175 provided on one side of the second evaporator 170.

Heat-exchange performance of the first and second evaporators 160 and 170 may vary according to a rotation number of each of the first evaporation fans 165 and 175. For example, if a large amount of refrigerant is required according to the operation of the first evaporator 160, the first evaporation fan 165 may increase in rotation number. Also, if cool air is sufficient, the first evaporation fan 165 may be reduced in rotation number.

If a large amount of refrigerant is required according to the operation of the second evaporator 170, the second evaporation fan 175 may increase in rotation number. Also, if cool air is sufficient, the second evaporation fan 175 may be reduced in rotation number.

In detail, if the concentration of the refrigerant into the first evaporator 160 occurs, i.e., the refrigerant within the second evaporator 170 is relatively lacking, the rotation number of the first evaporation fan 165 may be maintained or increased to reduce the rotation number of the second evaporation fan 175.

Since the rotation number of the first evaporation fan 165 is maintained or increased, a pressure (an evaporation pressure of the first evaporator) of the refrigerant flowing into the first evaporator 160 may be above a proper pressure. Thus, a heat-exchange amount through the first evaporator 160 may be maintained to at least preset amount or more.

On the other hand, since the rotation number of the second evaporation fan 175 increases, a pressure (an evaporation pressure of the second evaporator) of the refrigerant flowing into the second evaporator 170 may be below a proper pressure. Thus, a heat-exchange amount through the second evaporator 170 may be maintained to at least preset amount or less.

Thus, since the pressure of the second evaporator 170 is less than that of the first evaporator 160, the refrigerant passing through the flow adjusting unit 150a may further flow toward the second evaporator 170 due to a pressure difference therebetween. Thus, the refrigerant concentration phenomenon into the first evaporator 160 may be reduced somewhat.

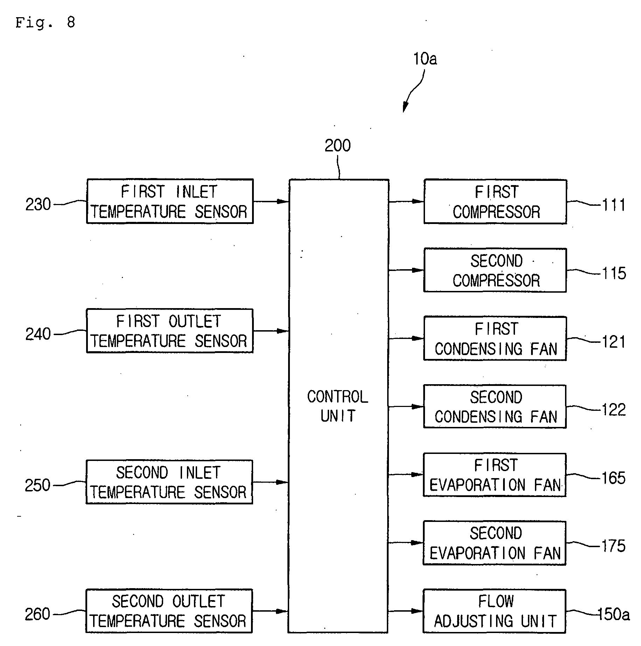

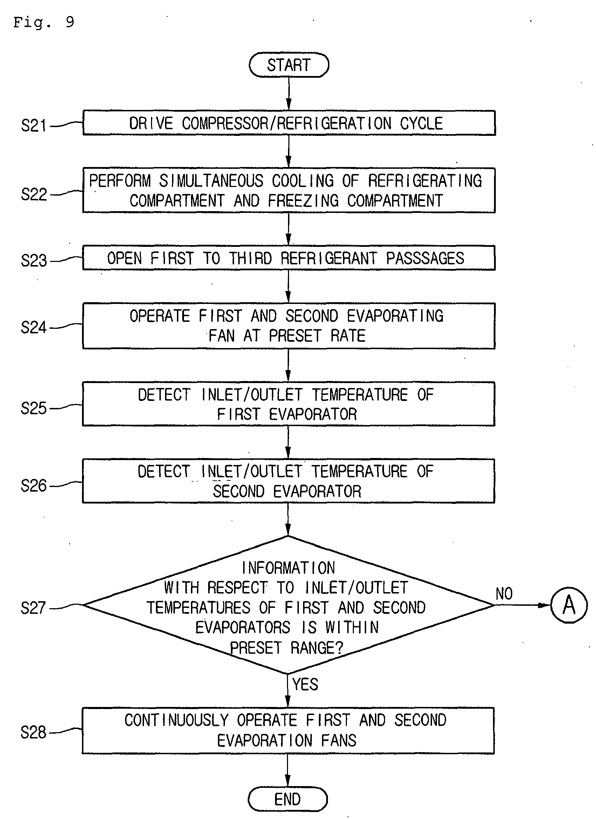

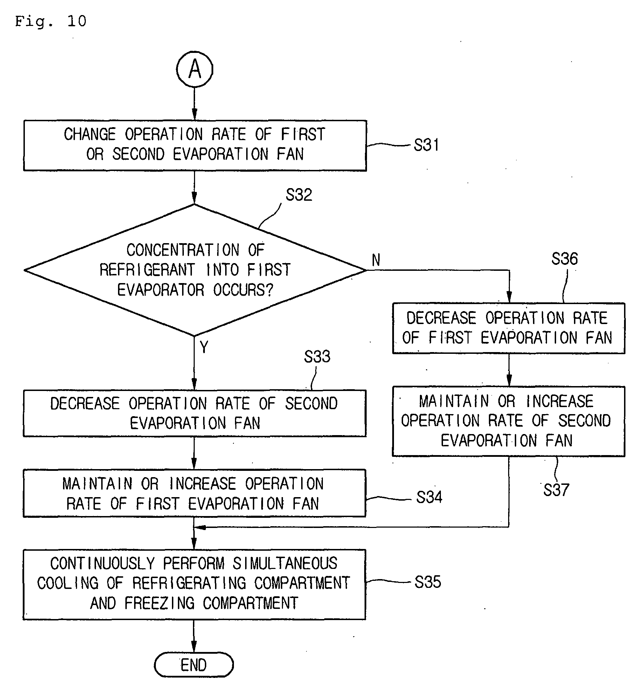

Fig. 8 is a block diagram illustrating constitutions of the refrigerator according to the second embodiment, and Figs. 9 and 10 are flowcharts illustrating a method for controlling the refrigerator according to the second embodiment.

Referring to Fig. 8, a refrigerator 10a according to a second embodiment includes a plurality of temperature sensors 230, 240, 250, and 260 for detecting inlet or outlet temperatures of each of first and second evaporators 160 and 170.

The plurality of temperature sensors 230, 240, 250, and 260 include a first inlet temperature sensor 230 for detecting the inlet-side temperature of the first evaporator 160 and a first outlet temperature sensor 240 for detecting the outlet-side temperature of the first evaporator 160.

Also, the plurality of temperature sensors 230, 240, 250, and 260 include a second inlet temperature sensor 250 for detecting the inlet-side temperature of the second evaporator 170 and a second outlet temperature sensor 260 for detecting the outlet-side temperature of the second evaporator 170.

The refrigerator 10a may further include a control unit 200 for controlling an operation of a flow adjusting unit 150a on the basis of the temperatures detected by the plurality of temperature sensors 230, 240, 250, and 260.

To perform cooling operations of the refrigerating and freezing compartments at the same time, the control unit 200 may control operations of first and second compressors 111 and 115, first and second condensation fans 121 and 122, and first and second evaporation fans 165 and 175.

A method for controlling the refrigerator according to the current embodiment will be described with reference to Figs. 9 and 10.

To drive the refrigerator, the first and second compressor 111 and 115 operate. A refrigeration cycle through the compression-condensation-expansion-evaporation of the refrigerant may operate according to the driving of the first and second compressors 111 and 115. The refrigerant evaporated in the second evaporator 170 may be compressed in the first compressor 111, and the compressed refrigerant may be mixed with the refrigerator evaporated in the first evaporator 160, and then, the mixture may be introduced into the second compressor 115 (S21).

The cooling operations of the refrigerating compartment and the freezing compartment may be performed at the same time according to the operation of the refrigeration cycle. To perform the cooling operations of the refrigerating compartment and the freezing compartment at the same time, a flow adjusting unit 150a may be controlled to open first to third refrigerant passages 102, 103, and 105.

That is, when the first to third refrigerant passages 102, 103, and 105 are opened, the refrigerant may be introduced into the first and second evaporators 160 and 170. Then, the refrigerant may be heat-exchanged in the first and second evaporators 160 and 170 to supply cool air into the refrigerating compartment and the freezing compartment. Here, a relatively large amount of refrigerant is provided into the first evaporator 160, an amount of refrigerant that is heat-exchanged in the first evaporator 160 may be greater than that of refrigerant that is heat-exchanged in the second evaporator 170.

In the current embodiment, when the operation of the refrigerator starts, the state in which all of the first to third refrigerant passages 102, 103, and 105 are opened is described as an initial default. However, unlike this, a state in which the first and second refrigerant passages 102 and 103 are opened, and the third refrigerant passage 105 is closed may be set to the initial default (S22, S23).

The first and second evaporation fans 165 and 175 may operate at a preset rate to perform the supply of the cool air into the refrigerating compartment and the freezing compartment. The set rate (hereinafter, referred to as a first set rate) of the first evaporation fan 165 may be an approximately middle rate or high rate, and the set rate (hereinafter, referred to a second set rate) of the second evaporation fan 175 may be a middle rate.

Here, as described in operation S23, when all of the first to third refrigerant passages 102, 103, and 105 are opened, a relatively more amount of refrigerant may flow into the first evaporator 160. Thus, the first evaporation fan 165 may operate at a rate higher than that of the second evaporation fan 175.

For example, the high rate of the first or second evaporation fan 165 or 175 may correspond to an input voltage of about 13V and a wind amount of about 0.8 CMM. Also, the middle rate of the first or second evaporation fan 165 or 175 may correspond to an input voltage of about 10V and a wind amount of about 0.5 CMM. A low rate of the first or second evaporation fan 165 or 175 may correspond to an input voltage of about 9V and a wind amount of about 0.4 CMM (S24).

Inlet and outlet temperatures of the first evaporator 160 may be detected by first inlet and outlet temperature sensors 230 and 240, respectively. Also, inlet and outlet temperatures of the second evaporator 170 may be detected by the second inlet and outlet temperature sensors 250 and 260, respectively (S25, S26).

The control unit 200 may determine an inlet/outlet temperature difference valve of the first evaporator 160 and an inlet/outlet temperature difference valve of the second evaporator 170.

When an amount of refrigerant introduced into the first or second evaporator 160 or 170 is above an adequate amount, the difference value between the inlet and outlet temperatures of the first or second evaporator 160 and 170 may decrease. On the other hand, when an amount of refrigerant introduced into the first or second evaporator 160 or 170 is below the adequate amount, the difference value between the inlet and outlet temperatures of the first or second evaporator 160 or 170 may increase.

The control unit 200 may recognize whether information with respect to the difference value between the inlet and outlet temperatures of the first or second evaporator 160 or 170 belongs to a preset range.

That is, the control unit 200 may recognize whether an amount of refrigerant flowing into the first or second evaporator 160 or 170 is excessive or lacking, i.e., whether the refrigerant is concentrated into the first or second evaporator 160 or 170 on the basis of the inlet/outlet temperature difference of the first evaporator 160 and the inlet/outlet temperature difference of the second evaporator 170.

In detail, whether the amount of refrigerant flowing into the first or second evaporator 160 or 170 is excessive or lacking may be determined on the basis of a difference value between the inlet/outlet temperature difference of the first evaporator 160 and the inlet/outlet temperature difference of the second evaporator 170 or a ratio of the inlet/outlet temperature differences of the first and second evaporators 160 and 170 (S27).

Hereinafter, the detailed determination method will be described.

As an example of the determination method, it may be determined whether the refrigerant is concentrated into one side according to whether the inlet/outlet temperature difference of the first evaporator 160 is equal to or greater or less than a preset reference valve.

The refrigerant circulated into the refrigeration cycle may be branched into the first and second evaporators 160 and 170 through the flow adjusting unit 150a to flow. Thus, when the inlet/outlet temperature difference of the first evaporator 160 is detected, a rate of the refrigerant passing through the first evaporator 170 may be recognized. Here, a rate of the refrigerant passing through the second evaporator 170 may be recognized on the basis of the rate of the refrigerant passing through the first evaporator 160.

For example, when the inlet/outlet temperature difference of the first evaporator 160 is greater than the reference value, it may be determined that an amount of refrigerant is lacking. On the other hand, it may be recognized that an amount of refrigerant flowing into the second evaporator 170 is relatively large.

In the current embodiment, a method for determining a refrigerant concentration phenomenon by using the inlet/outlet temperature difference of the first evaporator 160 will be described. Of cause, the refrigerant concentration phenomenon may be determined by using the inlet/outlet temperature difference of the second evaporator 170.

If the inlet/outlet temperature difference of the first evaporator 160 is equal to the preset reference value (a reference temperature), it may be recognized that the refrigerant concentration phenomenon into the first or second evaporator 160 or 170 may not occur.

On the other hand, if the inlet/outlet temperature difference of the first evaporator 160 is not equal to the preset reference value or is greater or less than the reference value, it may be recognized that the refrigerant concentration phenomenon into the first or second evaporator 160 or 170 occurs.

In detail, if the inlet/outlet temperature difference of the first evaporator 160 is less than the preset reference value, it may be recognized that a relatively large amount of refrigerant passes through the first evaporator 160. That is, it may be recognized that the refrigerant concentration phenomenon into the first evaporator 160 occurs.

On the other hand, if the inlet/outlet temperature difference of the first evaporator 160 is greater than the preset reference value, it may be recognized that a relatively small amount of refrigerant passes through the first evaporator 160. That is, it may be recognized that the refrigerant concentration phenomenon into the second evaporator 170 occurs.

As another example of the determination method, it may be determined whether the refrigerant is concentrated into one side according to whether the inlet/outlet temperature difference of the first evaporator 160 is equal to or is greater or less than a first set value. For example, the first set value may be 1.

When a ratio of the inlet/outlet temperature difference of the first evaporator 160 to the inlet/outlet temperature difference of the second evaporator 170 is 1, i.e., the inlet/outlet temperature differences of the first and second evaporators 160 and 170 are the same, it may be recognized that the refrigerant concentration phenomenon does not occur in the first or second evaporator 160 or 170.

On the other hand, when a ratio of the inlet/outlet temperature difference of the first evaporator 160 to the inlet/outlet temperature difference of the second evaporator 170 is greater than 1, i.e., the inlet/outlet temperature difference of the first evaporator 160 is greater than that of the second evaporator 170, it may be recognized that the refrigerant concentration phenomenon does not occur in the second evaporator 170.

Also, when a ratio of the inlet/outlet temperature difference of the first evaporator 160 to the inlet/outlet temperature difference of the second evaporator 170 is greater than 1, i.e., the inlet/outlet temperature difference of the first evaporator 160 is greater than that of the second evaporator 170, it may be recognized that the refrigerant concentration phenomenon does not occur in the second evaporator 170.

As further another example of the determination method, it may be determined whether the refrigerant is concentrated into one side according to whether a difference value between the inlet/outlet temperature difference of the first evaporator 160 and the inlet/outlet temperature difference of the second evaporator 170 is equal to a second set value, or is greater or less than the second set value. For example, the second set value may be 0.

When a value obtained by subtracting the inlet/outlet temperature difference of the second evaporator 170 from the inlet/outlet temperature difference of the first evaporator 160 is 0, i.e., the inlet/outlet temperature differences of the first and second evaporators 160 and 170 are the same, it may be recognized that the refrigerant concentration phenomenon does not occur in the first or second evaporator 160 or 170.

On the other hand, when a ratio of the inlet/outlet temperature difference of the first evaporator 160 to the inlet/outlet temperature difference of the second evaporator 170 is greater than 0, i.e., the inlet/outlet temperature difference of the first evaporator 160 is greater than that of the second evaporator 170, it may be recognized that the refrigerant concentration phenomenon does not occur in the second evaporator 170.

Also, when a ratio of the inlet/outlet temperature difference of the first evaporator 160 to the inlet/outlet temperature difference of the second evaporator 170 is less than 0, i.e., the inlet/outlet temperature difference of the first evaporator 160 is less than that of the second evaporator 170, it may be recognized that the refrigerant concentration phenomenon does not occur in the first evaporator 160.

If it is recognized that the refrigerant concentration phenomenon into the first or second evaporator 160 and 170 does not occur through one of the above-described three determination methods, the first and second evaporation fans 165 and 175 may continuously operate at the first and second set rates (S28).

On the other hand, if it is recognized that the refrigerant concentration phenomenon occurs in the first or second evaporator 160 or 170, the operation rate of the first or second evaporation fan 165 or 175 may be changed (S31).

If the refrigerant concentration phenomenon occurs in the first evaporator 160, the operation rate of the second evaporation fan 175 may decrease. Thus, the second evaporation fan 175 may operate at a rate lower than the second set rate. For example, the second evaporation fan 175 may operate a low rate.

Also, since the operation rate of the first evaporation fan 165 is maintained or increased, the first evaporation fan 165 may be maintained at the first set rate or operate at a rate higher than the first set rate. For example, the first evaporation fan 165 may operate at the middle or high rate.

When the operation rate of the second evaporation fan 175 decreases, and the operation rate of the first evaporation fan 165 is maintained or increased, the refrigerant passing through the second evaporator 170 may decrease in evaporation pressure, and the refrigerant passing through the first evaporator 160 may be maintained or increased in evaporation pressure.

Due to the difference in pressure, the refrigerant passing through the flow adjusting unit 150a may further flow toward the second evaporator 170 when compared to that of the first evaporator 160. Thus, the refrigerant concentration phenomenon into the first evaporator 160 may be reduced (S32, S33, S34). Also, in addition to the reduced refrigerant concentration phenomenon, the simultaneous cooling operation for the refrigerating compartment and the freezing compartment may be continuously performed (S35).

If the refrigerant concentration phenomenon occurs in the second evaporator 170, the operation rate of the first evaporation fan 165 may decrease. Thus, the first evaporation fan 155 may operate at a rate lower than the first set rate. For example, the first evaporation fan 165 may operate at the low rate.

Also, since the operation rate of the second evaporation fan 175 is maintained or increased, the second evaporation fan 175 may be maintained at the second set rate or operate at a rate higher than the second set rate. For example, the second evaporation fan 175 may operate at the middle or high rate.

When the operation rate of the first evaporation fan 165 decreases, and the operation rate of the second evaporation fan 175 is maintained or increased, the refrigerant passing through the first evaporator 160 may decrease in evaporation pressure, and the refrigerant passing through the second evaporator 170 may be maintained or increased in evaporation pressure.

Due to the difference in pressure, the refrigerant passing through the flow adjusting unit 150a may further flow toward the first evaporator 160 when compared to that of the second evaporator 170. Thus, the refrigerant concentration phenomenon into the second evaporator 150 may be reduced (S36, S37).

Hereinafter, a third embodiment will be described. In this embodiment is characterized in that an operation rate of an evaporation fan is controlled to control an operation of a flow adjusting unit. The features of the current embodiment will be mainly described below.

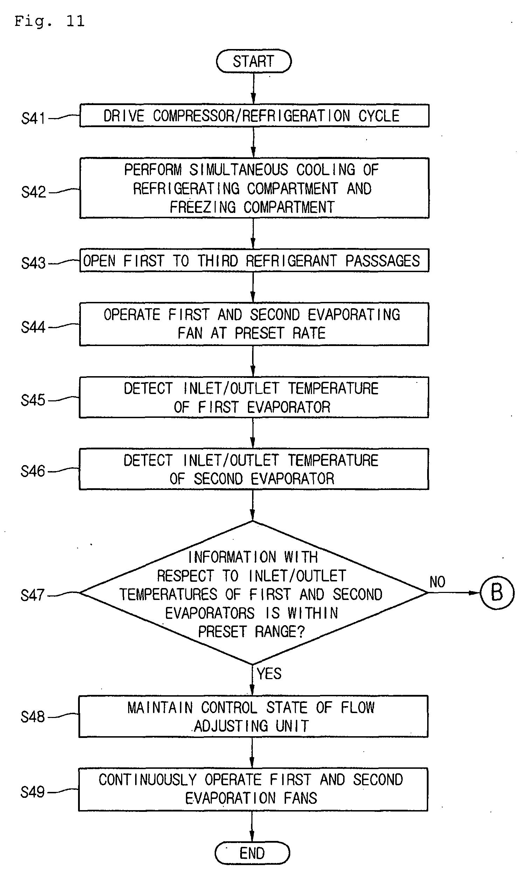

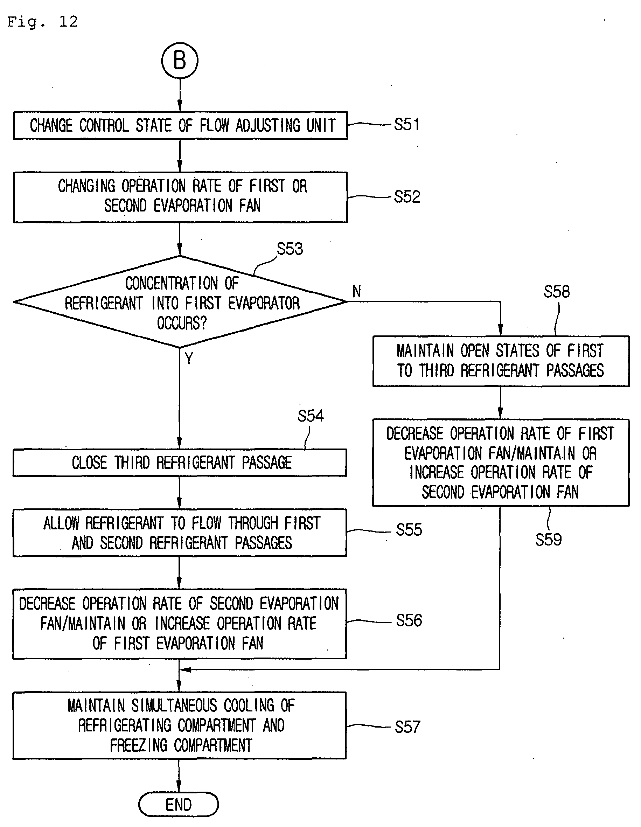

Figs. 11 and 12 are flowcharts illustrating a method for controlling a refrigerator according to a third embodiment.

Referring to Figs. 11 and 12, to operate the refrigerator, first and second compressors 111 and 115 operate to drive a refrigeration cycle, thereby performing an simultaneous cooling operation for a refrigerating compartment and a freezing compartment. To perform the cooling operations of the refrigerating compartment and the freezing compartment at the same time, a flow adjusting unit 150a may be controlled to open first to third refrigerant passages 102, 103, and 105 (S41, S42, S43).

While performing the simultaneous cooling operation, first and second evaporation fans 165 and 175 may operate at the first and second set rates, respectively. Here, the second set rate of the second evaporation fan 165 may be an approximately middle rate, and the first set rate of the first evaporation fan 165 may be an approximately middle rate or high rate (S44).

Inlet and outlet temperatures of a first evaporator 160 and inlet and outlet temperatures of a second evaporator 170 may be detected (S45, S46).

The control unit 200 may determine an inlet/outlet temperature difference valve of the first evaporator 160 and an inlet/outlet temperature difference valve of the second evaporator 170 to recognize whether information with respect to the inlet/outlet temperature differences of the first and second evaporators 160 and 170 belongs to a preset range.

Also, the control unit 200 may recognize whether an amount of refrigerant flowing into the first or second evaporator 160 or 170 is excessive or lacking, i.e., whether the refrigerant is concentrated into the first or second evaporator 160 or 170 according to whether the information with respect to the inlet/outlet temperature differences of the first and second evaporators 160 and 170 belongs to the preset range.

If the information with respect to the inlet/outlet temperature differences of the first and second evaporators 160 and 170 belongs to the preset range, it may be recognized that the refrigerant concentration phenomenon into the first or second evaporator 160 or 170 may not occur.

In this case, the control state of the flow adjusting unit 150a may be maintained. That is, the flow adjusting unit 150a may be controlled to open all of the first to third refrigerant passages 102, 103, and 105 (S48). Also, the first and second evaporation fans 165 and 175 may continuously operate at the first and second set rates, respectively (S49).

On the other hand, if it is recognized that the refrigerant concentration phenomenon occurs in the first or second evaporator 160 or 170, the control state of the flow adjusting unit 150a may be changed. Also, the first or second evaporation fan 165 or 175 may be changed in operation rate (S51, S52).

If the refrigerant concentration phenomenon occurs in the first evaporator 160, the third refrigerant passage 105 may be closed to control a flow of the refrigerant through the first and second refrigerant passages 102 and 103. Of course, the first refrigerant passage 102 may be closed to control a flow of the refrigerant through the second and third refrigerant passages 103 and 105.

In this case, an amount of refrigerant introduced into the first evaporator 160 may decrease, and an amount of refrigerant introduced into the second evaporator 170 may increase to solve the refrigerant concentration phenomenon in the first evaporator 160 (S53, S54, S55).

Also, since the operation rate of the second evaporation fan 175 decreases, the second evaporation fan 175 may operate at a rate lower than the second set rate, for example, the low rate.

Also, since the operation rate of the first evaporation fan 165 is maintained or increased, the first evaporation fan 165 may be maintained at the first set rate or operate at a rate higher than the first set rate. For example, the first evaporation fan 165 may operate at the middle or high rate.

When the operation rate of the second evaporation fan 175 decreases, and the operation rate of the first evaporation fan 165 is maintained or increased, the refrigerant may further flow toward the second evaporator 170 than the first evaporator 160 due to the evaporation pressure difference between the first and second evaporations 160 and 170. Thus, the refrigerant concentration phenomenon into the first evaporator 160 may be reduced (S56). Also, in addition to the reduced refrigerant concentration phenomenon, the simultaneous cooling operation for the refrigerating compartment and the freezing compartment may be continuously performed (S57).

If the refrigerant concentration phenomenon occurs in the second evaporator 170, the opened states of the first to third refrigerant passages 102, 103, and 105 may be maintained (S58).

Also, since the operation rate of the first evaporation fan 165 decreases, the first evaporation fan 165 may operate at a rate lower than the first set rate. For example, the first evaporation fan 165 may operate at the low rate.

Also, since the operation rate of the second evaporation fan 175 is maintained or increased, the second evaporation fan 175 may be maintained at the second set rate or operate at a rate higher than the second set rate. For example, the second evaporation fan 175 may operate at the middle or high rate.

When the operation rate of the first evaporation fan 165 decreases, and the operation rate of the second evaporation fan 175 is maintained or increased, the refrigerant passing through the flow adjusting unit 150a may further flow toward the first evaporator 160 than the second evaporator 170 due to the evaporation pressure difference between the first and second evaporations 160 and 170. Thus, the refrigerant concentration phenomenon into the second evaporator 170 may be reduced (S59).

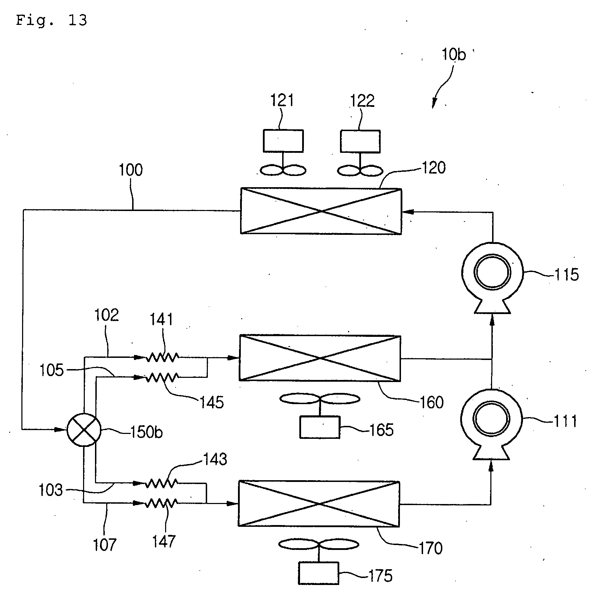

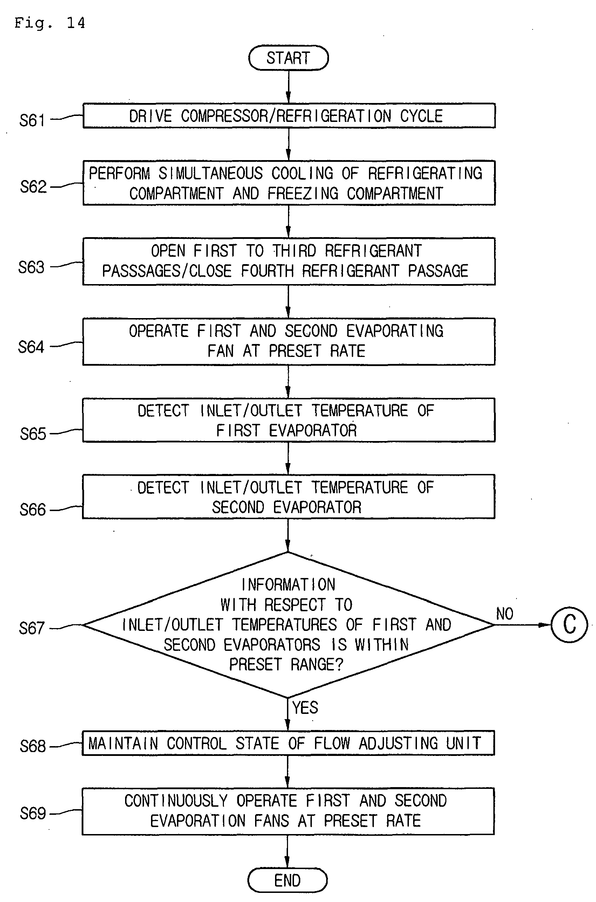

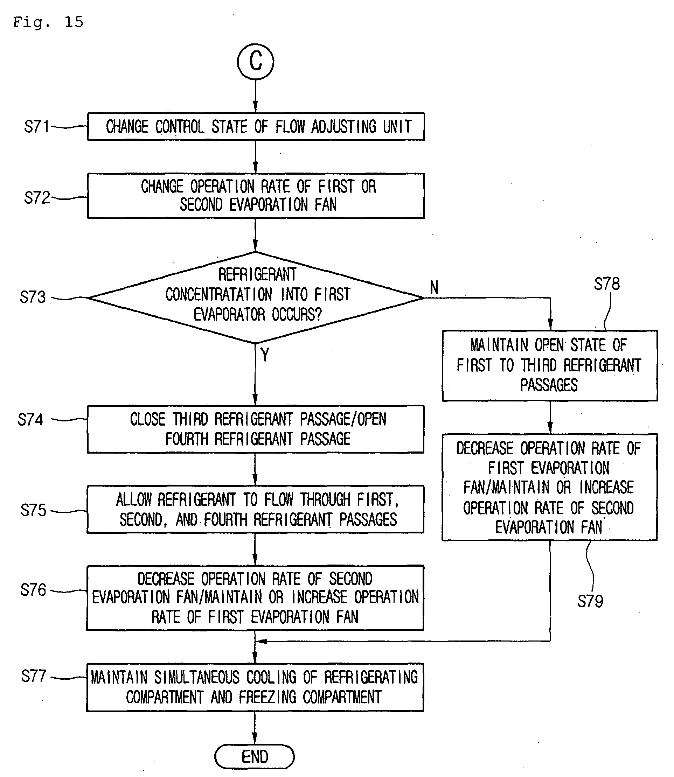

Fig. 13 is a view illustrating a system having a refrigeration cycle in a refrigerator according to a fourth embodiment, and Figs. 14 and 15 are flowcharts illustrating a method for controlling the refrigerator according to the fourth embodiment.

Referring to Fig. 13, a refrigerator 10b according to a fourth embodiment includes a refrigerant tube 100 for guiding a flow of a refrigerant condensed in a condenser 120, a flow adjusting unit 150b disposed in the refrigerant tube 100 to branch the refrigerant into first and second evaporators 160 and 170, and a plurality of refrigerant passages 102, 103, 105, and 107 extending from an outlet side of the flow adjusting unit 150b to the first and second evaporators 160 and 170.

Also, a first evaporation fan 165 may be disposed on one side of the first evaporator 160, and a second evaporation fan 175 disposed on one side of the second evaporator 170.

The plurality of refrigerant passages 102, 103, 105, and 107 may be understood as "branch passages" that are branched from the refrigerant tube 100. The plurality of refrigerant passages 102, 103, 105, and 107 may include first and third refrigerant passages 102 and 105 connected to the first evaporator 160 and second and fourth refrigerant passages 103 and 107 connected to the second evaporator 170.

The first and third refrigerant passages 102 and 105 may be called a "first evaporation passage" in that the first and third refrigerant passages 102 and 105 guide the introduction of the refrigerant into the first evaporator 160. Also, the second and fourth refrigerant passages 103 and 107 may be called a "second evaporation passage" in that the second and fourth refrigerant passages 103 and 107 guide the introduction of the refrigerant into the second evaporator 170.

The refrigerants flowing into the first and third refrigerant passages 102 and 105 may be mixed with each other and then be introduced into the first evaporator 160. Also, the refrigerants flowing into the second and fourth refrigerant passages 103 and 107 may be mixed with each other and then be introduced into the second evaporator 170.

The refrigerant discharged from the second evaporator 170 may be suctioned into the first compressor 111, and the refrigerant compressed in the first compressor 111 may be mixed with the refrigerator discharged from the first evaporator 160, and then, the mixture may be introduced into the second compressor 115.

A plurality of expansion devices 141, 143, 145, and 147 may be disposed in the plurality of refrigerant passages 102, 103, 105, and 107. Each of the plurality of expansion devices 141, 143, 145, and 147 may include a capillary tube. In detail, the plurality of expansion devices 141, 143, 145, and 147 may include a first expansion device 141 disposed in the first refrigerant passage 102, a second expansion device 143 disposed in the second refrigerant passage 103, a third expansion device 145 disposed in the third refrigerant passage 105, and a fourth expansion device 147 disposed in the fourth refrigerant passage 107.

The flow adjusting unit 150b may include a five-way valve having one inflow hole through which the refrigerant is introduced and four discharge holes through which the refrigerant is discharged. The four discharge holes may be connected to the first to fourth refrigerant passages 102, 103, 105, and 107.

At least one of the first and third refrigerant passages 102 and 105 and at least one of the second and fourth refrigerant passages 103 and 104 may be opened according to the control of the flow adjusting unit 150b.

For example, when the first to third refrigerant passages 102, 103, and 105 are opened, and the fourth refrigerant passage 107 is closed, an amount of refrigerant introduced into the first evaporator 160 may be greater than that of refrigerant introduced into the second evaporator 170.

On the other hand, when the first, second, and fourth refrigerant passages 102, 103, and 107 are opened, and the third refrigerant passage 105 is closed, an amount of refrigerant introduced into the second evaporator 170 may be greater than that of refrigerant introduced into the first evaporator 160.

Referring to Figs. 14 and 15, when the first and second compressor 111 and 115 operate, a refrigeration cycle through compression-condensation-expansion-evaporation of the refrigerant may operate (S61).

The cooling operations of the refrigerating compartment and the freezing compartment may be performed at the same time according to the operation of the refrigeration cycle. To perform the cooling operations of the refrigerating compartment and the freezing compartment at the same time, the flow adjusting unit 150b may be controlled to open the first to third refrigerant passages 102, 103, and 105 and close the fourth refrigerant passage 107.

In the current embodiment, when the operation of the refrigerator starts, the state in which the first to third refrigerant passages 102, 103, and 105 are opened, and the fourth refrigerant passage 107 is closed is described as an initial default. However, unlike this, a state in which all of the first to fourth refrigerant passages 101, 103, 015, and 107 are opened may be set to the initial default (S62, S63).

While performing the simultaneous cooling operation, the first and second evaporation fans 165 and 175 may operate at the first and second set rates, respectively. Here, the second set rate of the second evaporation fan 175 may be an approximately middle rate, and the first set rate of the first evaporation fan 165 may be an approximately middle rate or high rate (S64).

Inlet and outlet temperatures of a first evaporator 160 and inlet and outlet temperatures of a second evaporator 170 may be detected (S65, S66).

The control unit 200 may recognize whether the refrigerant concentration phenomenon into the first or second evaporator 160 or 170 occurs according to whether information with respect to the inlet/outlet temperature differences of the first and second evaporators 160 and 170 belongs to a preset range.

If it is recognized that the refrigerant concentration phenomenon into the first or second evaporator 160 and 170 does not occur, the control state of the flow adjusting unit 150b may be maintained. That is, the flow adjusting unit 150b may be controlled to open the first to third refrigerant passages 102, 103, and 105 and close the fourth refrigerant passage 107 (S68).

Also, the first and second evaporation fans 165 and 175 may continuously operate at the first and second set rates, respectively (S69).

On the other hand, if it is recognized that the refrigerant concentration phenomenon occurs in the first or second evaporator 160 or 170, the control state of the flow adjusting unit 150b may be changed. Also, the first or second evaporation fan 165 or 175 may be changed in operation rate (S71, S72).

If the refrigerant concentration phenomenon occurs in the first evaporator 160, the third refrigerant passage 105 may be closed, and the fourth refrigerant passage 107 may be opened to control a flow of the refrigerant through the first, second, and fourth refrigerant passages 102, 103, and 107. Here, the first refrigerant passage 102 may be closed instead of the third refrigerant passage 105.

In this case, an amount of refrigerant introduced into the first evaporator 160 may decrease, and an amount of refrigerant introduced into the second evaporator 170 may increase to solve the refrigerant concentration phenomenon in the first evaporator 160 (S73, S74, S75).

Also, since the operation rate of the second evaporation fan 175 decreases, the second evaporation fan 175 may operate at a rate lower than the second set rate, for example, the low rate.

Also, since the operation rate of the first evaporation fan 165 is maintained or increased, the first evaporation fan 165 may be maintained at the first set rate or operate at a rate higher than the first set rate. For example, the first evaporation fan 165 may operate at the middle or high rate.

When the operation rate of the second evaporation fan 175 decreases, and the operation rate of the first evaporation fan 165 is maintained or increased, the refrigerant may further flow toward the second evaporator 170 than the first evaporator 160 due to the evaporation pressure difference between the first and second evaporations 160 and 170. Thus, the refrigerant concentration phenomenon into the first evaporator 160 may be reduced (S76). Also, in addition to the reduced refrigerant concentration phenomenon, the simultaneous cooling operation for the refrigerating compartment and the freezing compartment may be continuously performed (S77).

If the refrigerant concentration phenomenon occurs in the second evaporator 170, the opened states of the first to third refrigerant passages 102, 103, and 105 may be maintained (S68).

Also, since the operation rate of the first evaporation fan 165 decreases, the first evaporation fan 165 may operate at a rate lower than the first set rate. For example, the first evaporation fan 165 may operate at the low rate.

Also, since the operation rate of the second evaporation fan 175 is maintained or increased, the second evaporation fan 175 may be maintained at the second set rate or operate at a rate higher than the second set rate. For example, the second evaporation fan 175 may operate at the middle or high rate.

When the operation rate of the first evaporation fan 165 decreases, and the operation rate of the second evaporation fan 175 is maintained or increased, the refrigerant passing through the flow adjusting unit 150b may further flow toward the first evaporator 160 than the second evaporator 170 due to the evaporation pressure difference between the first and second evaporations 160 and 170. Thus, the refrigerant concentration phenomenon into the second evaporator 170 may be reduced (S79).

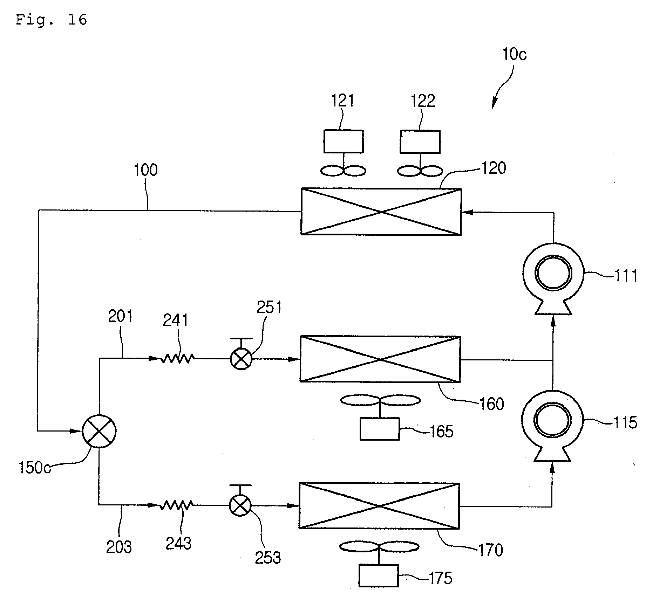

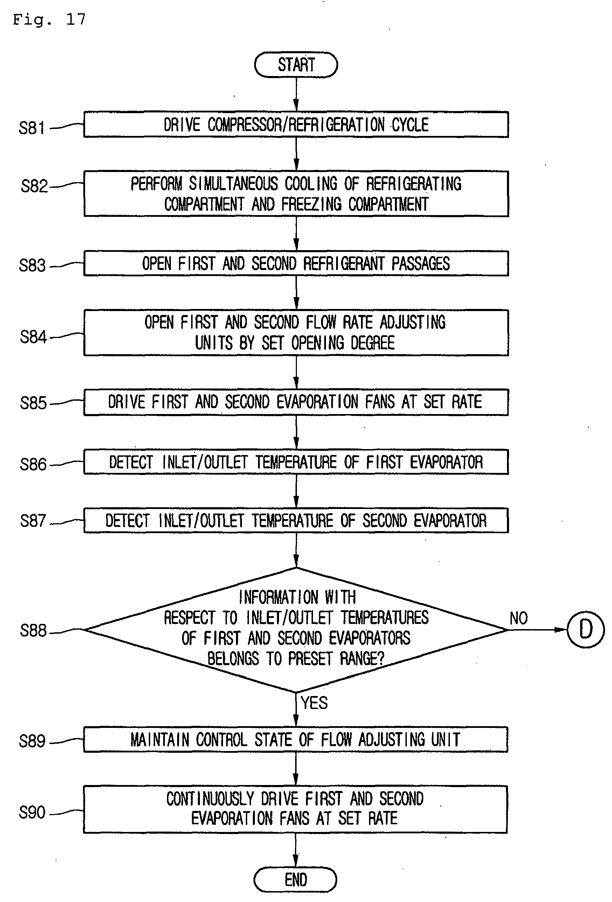

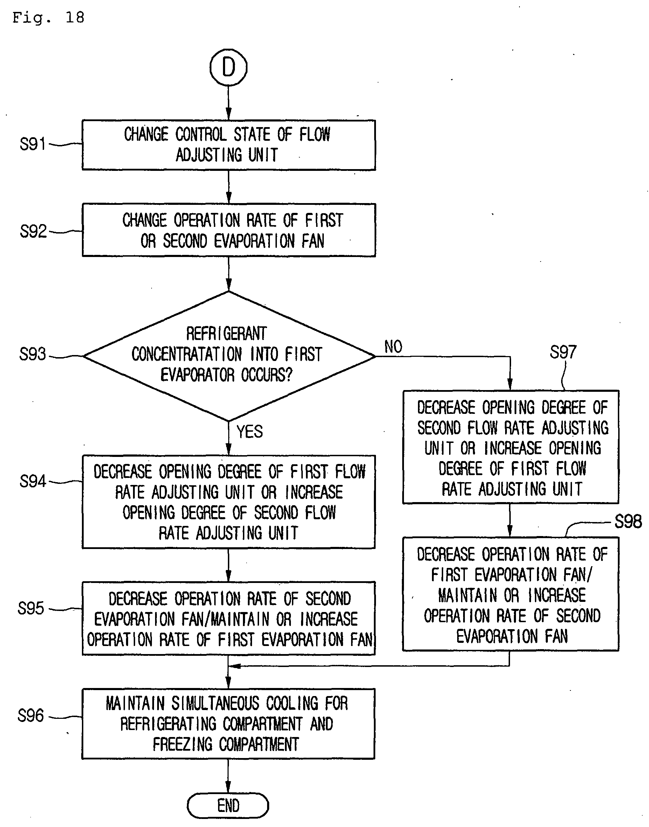

Fig. 16 is a view illustrating a system having a refrigeration cycle in a refrigerator according to a fifth embodiment, and Figs. 17 and 18 are flowcharts illustrating a method for controlling the refrigerator according to the fifth embodiment.

Referring to Fig. 16, a refrigerator 10c according to a fifth embodiment includes a refrigerant tube 100 for guiding a flow of a refrigerant condensed in a condenser 120, a flow adjusting unit 150c disposed in the refrigerant tube 100 to branch the refrigerant into first and second evaporators 160 and 170, and a plurality of refrigerant passages 201 and 203 extending from an outlet side of the flow adjusting unit 150c to the first and second evaporators 160 and 170.

The plurality of refrigerant passages 201 and 203 may be understood as "branch passages" that are branched from the refrigerant tube 100. The plurality of refrigerant passages 201 and 203 may include a first refrigerant passage 201 connected to the first evaporator 160 and a second refrigerant passage 203 connected to the second evaporator 170.

A plurality of expansion devices 201 and 203 may be disposed in the plurality of refrigerant passages 241 and 243. Each of the plurality of expansion devices 241 and 243 may include a capillary tube. In detail, the plurality of expansion devices 241 and 243 may include a first expansion device 241 disposed in the first refrigerant passage 201 and a second expansion device 243 disposed in the second refrigerant passage 203.

The flow adjusting unit 150c may include a three-way valve having one inflow hole through which the refrigerant is introduced and two discharge holes through which the refrigerant is discharged. The two discharge holes may be connected to the first and second refrigerant passages 201 and 230. The flow adjusting unit 150c may be controlled so that the refrigerant is introduced into the first and second refrigerant passages 201 and 203 at the same time.

The refrigerator 10c includes flow amount adjusting units 251 and 253 for adjusting a flow of the refrigerant. The flow amount adjusting units 251 and 253 may be disposed in at least one refrigerant passage of the first and second refrigerant passages 201 and 203. For example, the flow rate adjusting units 251 and 253 may include a first flow rate adjusting unit 251 disposed in the first refrigerant passage 201 and a second flow rate adjusting unit 253 disposed in the second refrigerant passage 203.

Each of the first and second flow rate adjusting units 251 and 253 may include an electric expansion valve (EEV) of which an opened degree is adjustable.

Although the first and second flow rate adjusting units 251 and 253 are respectively disposed at outlet sides of the first and second expansion devices 241 and 243 in Fig. 16, the present disclosure is not limited thereto. For example, the first and second flow rate adjusting units 251 and 253 may be disposed at inlet sides of the first and second expansion devices 241 and 243.

If the opening degree of the first or second flow rate adjusting unit 251 or 253 decreases, an amount of refrigerant flowing through the opening having the decreasing opening degree may decrease. On the other hand, if the opened degree of the first or second flow rate adjusting unit 251 or 253 increases, an amount of refrigerant flowing through the opening having the increasing opening degree may increase.

For example, if the opening degree of the second flow rate adjusting unit 253 is relatively greater than that of the first flow rate adjusting unit 251, a more amount of refrigerant may flow into the first refrigerant passage 201. On the other hand, if the opening degree of the second flow rate adjusting unit 253 is relatively greater than that of the first flow rate adjusting unit 251, a more amount of refrigerant may flow into the second refrigerant passage 203.

Since the first and second flow rate adjusting units 251 and 253 are provided, the opening degree of each of the refrigerant passages may be finely adjusted. Thus, an amount of refrigerant to be introduced into the first or second evaporator 160 or 170 may be finely adjustable. As a result, while the first and second evaporators operate, the refrigerant concentration phenomenon into the first or second evaporator 160 or 170 may be prevented.

A method for controlling the refrigerator according to the current embodiment will be described with reference to Figs. 17 and 18.

Referring to Figs. 17 and 18, when the first and second compressor 111 and 115 are driven to operate the refrigerator, a refrigeration cycle through compression-condensation-expansion-evaporation of the refrigerant may operate (S71).

Also, the cooling operations of the refrigerating compartment and the freezing compartment may be performed at the same time according to the operation of the refrigeration cycle. To perform the cooling operations of the refrigerating compartment and the freezing compartment at the same time, the flow adjusting unit 130 may be controlled to open the first and second refrigerant passages 201 and 203 (S82, S83). Also, the first and second flow rate adjusting units 251 and 253 may be opened by a preset opening degree (S84).

While performing the simultaneous cooling operation, first and second evaporation fans 165 and 175 may operate at the first and second set rates, respectively. Here, the second set rate of the second evaporation fan 175 may be an approximately middle rate, and the first set rate of the first evaporation fan 165 may be an approximately middle rate or high rate (S85).

Inlet and outlet temperatures of a first evaporator 160 and inlet and outlet temperatures of a second evaporator 170 may be detected (S86, S87).

The control unit 200 may recognize whether the refrigerant concentration phenomenon into the first or second evaporator 160 or 170 occurs according to whether information with respect to the inlet/outlet temperature differences of the first and second evaporators 160 and 170 belongs to a preset range.

If it is recognized that the refrigerant concentration phenomenon into the first or second evaporator 160 and 170 does not occur, the control state of the flow adjusting unit 150c may be maintained. That is, the opened state of each of the flow rate adjusting units 251 and 253 may be maintained (S89).

Also, the first and second evaporation fans 165 and 175 may continuously operate at the first and second set rates, respectively (S90).

On the other hand, if it is recognized that the refrigerant concentration phenomenon occurs in the first or second evaporator 160 or 170, the control state of each of the first and second flow adjusting part 251 and 253 may be changed. Also, the first or second evaporation fan 165 or 175 may be changed in operation rate (S91, S92).

If the refrigerant concentration phenomenon occurs in the first evaporator 160, at least one of the control of decreasing the opening degree of the first flow rate adjusting part 251 and the control of increasing the opening degree of the second flow rate adjusting part 253 may be performed (S94).

Also, since the operation rate of the second evaporation fan 175 decreases, the second evaporation fan 175 may operate at a rate lower than the second set rate, for example, the low rate.

Also, since the operation rate of the first evaporation fan 165 is maintained or increased, the first evaporation fan 165 may be maintained at the first set rate or operate at a rate higher than the first set rate. For example, the first evaporation fan 165 may operate at the middle or high rate.

When the operation rate of the second evaporation fan 175 decreases, and the operation rate of the first evaporation fan 165 is maintained or increased, the refrigerant may further flow toward the second evaporator 170 than the first evaporator 160 due to the evaporation pressure difference between the first and second evaporations 160 and 170. Thus, the refrigerant concentration phenomenon into the first evaporator 160 may be reduced (S95).

As a result, an amount of refrigerant introduced into the first evaporator 160 may decrease, and an amount of refrigerant introduced into the second evaporator 170 may increase to solve the refrigerant concentration phenomenon in the first evaporator 160. Also, in addition to the reduced refrigerant concentration phenomenon, the simultaneous cooling operation for the refrigerating compartment and the freezing compartment may be continuously performed (S96).

If the refrigerant concentration phenomenon occurs in the second evaporator 170, at least one of the control of decreasing the opening degree of the second flow rate adjusting unit 253 and the control of increasing the opening degree of the first flow rate adjusting part 251 may be performed (S97).

Also, since the operation rate of the first evaporation fan 165 decreases, the first evaporation fan 165 may operate at a rate lower than the first set rate. For example, the first evaporation fan 165 may operate at the low rate.

Also, since the operation rate of the second evaporation fan 175 is maintained or increased, the second evaporation fan 175 may be maintained at the second set rate or operate at a rate higher than the second set rate. For example, the second evaporation fan 175 may operate at the middle or high rate.

When the operation rate of the first evaporation fan 165 decreases, and the operation rate of the second evaporation fan 175 is maintained or increased, the refrigerant passing through the flow adjusting unit 150c may further flow toward the first evaporator 160 than the second evaporator 170 due to the evaporation pressure difference between the first and second evaporations 160 and 170. Thus, the refrigerant concentration phenomenon into the second evaporator 170 may be reduced (S98).

As described above, when the refrigerant concentration phenomenon occurs in the first or second evaporator 160 or 170, the opening degree of each of the first and second flow rate adjusting parts 251 and 253 and the operation rate of each of the first and second evaporation fans 165 and 175 may be changed to solve the refrigerant concentration phenomenon, and refrigerating compartment and the freezing compartment may be cooled at the same time.

According to the proposed embodiments, since the plurality of condensing fans are disposed within the machine room, the sufficient air flow for the heat exchange in the condenser may be generated, and thus, the heat-exchange efficiency of the condenser may be improved.

Particularly, the plurality of condensing fans may be disposed on a side of the condenser in parallel to each other. Since a width of an area on which the plurality of condensing fans are disposed is greater than that of the condenser, the air may uniformly pass over the whole region of the condenser.

Also, the plurality of condensing fans may be disposed on the base, but not be disposed on the drain pan so that the condensing fans are lowered in installation position. Therefore, the machine room may be reduced in height. Also, since only the condenser is disposed on the drain pan, the condenser may increase in size. Therefore, an amount of condensed heat may increase.

Also, since the plurality of condensing fans rotate to generate the air flow, the rotation number of each of condensing fans may be less. Therefore, the noises due to the operation of the fan may be reduced.

Also, the distance between the condensing fan and the drain pan may be spaced a preset distance or more from each other to generate an eddy current between the condensing fan and the drain pan, thereby reducing an amount of flowing air and an occurrence of the noises.

Also, since the plurality of condensing fans operate at the same time, the phenomenon in which the backflow occurs through the condensing fan that does not operate when the plurality of condensing fans alternately operate may be prevented.

Also, when the plurality of condensing fans are controlled in pulse through the duty input, the detected rotation number may be feedback to control the plurality of condensing fans so that the condensing fans rotates at the same rotation number. Also, the noises occurring due to the beat phenomenon of the plurality of condensing fans may be reduced.

Also, the plurality of evaporators may operate at the same time to effectively cool the plurality of storage compartments. Particularly, the plurality of refrigerant passages may be provided at the inlet side of at least one evaporator of the plurality of evaporators, and the expansion device may be provided in each of the refrigerant passage to control the flow of the refrigerant.

Also, since a flow rate of the refrigerant introduced into the evaporator is determined on the basis of the inlet/outlet temperatures of the evaporator, and the flow adjusting unit is controlled according to the excess or leakage of the refrigerant, the refrigerant may be effectively distributed into the plurality of evaporators.

Therefore, the refrigerant concentration phenomenon into one evaporator of the plurality of evaporators may be prevented, and even through the refrigerant concentration phenomenon into a specific evaporator occurs, the refrigerant may be uniformly distributed.

Also, if it is recognized that the refrigerant is concentrated into a specific evaporator, the rotation number of the evaporation fan provided on a side of each of the evaporators may be adjusted to uniformly distribute the refrigerant. Particularly, the rotation number of the evaporation fan in which the refrigerant is leak may relatively decrease, and the rotation number of the evaporation fan in which the refrigerant concentration phenomenon occurs may relatively increase to prevent the refrigerant from being concentrated into one side.

Also, since the rotation number of the evaporation fan is adequately adjusted according to whether the refrigerant concentration phenomenon occurs, the fan operation input may be reduced, and thus, power consumption may be reduced when compared to a case in which the evaporation fan rotates at the same rotation number.

Also, since the flow rate adjusting unit of which an opening degree is adjustable is provided in the plurality of refrigerant passages, the flow rate of the refrigerant may be accurately controlled.

## Claims

1. A refrigerator (10, 10a, 10b, 10c) comprising:
a machine room (101) defined in one side of a storage compartment;
a base (105) defining a bottom surface of the machine room (101);
a compressor (111, 115) seated on the base (105) for compressing a refrigerant;
a condenser (120) for condensing the refrigerant compressed in the compressor (111, 115), the condenser (120) being disposed on one side of the compressor (111, 115);
a drain pan (125) disposed on the base (105) and adapted to store condensed water generated in the condenser (120); a fan assembly (130) coupled to the base (105) and adapted to generate an air flow within the machine room (101),
wherein the fan assembly (130) comprises a plurality of condensation fans (121, 122); and
a control unit (200) for applying an electrical signal to allow the plurality of condensation fans (121, 122) to control a duty value that defines a pulse value applied into the plurality of condensation fans (121, 122);
**characterized in that**
the compressor (111, 115) comprises a first compressor (111) primarily for compressing the refrigerant and a second compressor (115) for additionally compressing the refrigerant compressed in the first compressor (111),
the fan assembly (130) comprises a first condensation fan (121) and a second condensation fan (122) coupled to one side of the first condensation fan (121),
the first compressor (111) and the first condensation fan (121) form a first row, and
the second compressor (115) and the second condensation fan (122) form a second row,
the refrigerator further comprises a rotation number detection unit (210, 220) for detecting a rotation number of each of the first and the second condensation fans (121, 122), and
the control unit (200) is configured to control the rotation number of each of the first and the second condensation fans (121, 122) such that the rotation numbers of the first and second condensation fans (121, 122) are identical to each other on the basis of the information with respect to the detected rotation number.

2. The refrigerator (10, 10a, 10b, 10c) according to claim 1, wherein the fan assembly (130) is spaced a preset distance outward from the drain pan (125).

3. The refrigerator (10, 10a, 10b 10c) according to claim 2, wherein the preset distance ranges from about 20 mm to about 40 mm.

4. The refrigerator (10, 10a, 10b, 10c) according to claim 1, wherein a width of the fan assembly (130) in one direction is greater than that of the condenser (120) in one direction, and
the first and second condensation fans (121, 122) are disposed on one side of the condenser (120) in parallel to each other.

5. The refrigerator (10, 10a, 10b, 10c) according to any one of claims 1 to 4, wherein the control unit (200) is configured to input a preset duty value into the plurality of condensation fans (121, 122),
when the plurality of condensation fans (121, 122) have the same rotation number, or a difference between the rotation numbers of the plurality of condensation fans (121, 122) is within a preset value, the preset duty value is maintained, and
when the difference between the rotation numbers of the plurality of condensation fans (121, 122) is above the preset value, the duty value of the condensation fan having a lower rotation number is changed.

6. The refrigerator (10, 10a, 10b, 10c) according to anyone of claims 1 to 5, further comprising:
a plurality of evaporators (160, 170) comprising first and second evaporators (160, 170) for evaporating the refrigerant;
a plurality of evaporation fans (165, 175) comprising first and second evaporation fans (165, 175) that are respectively disposed on one side of the first and second evaporators (160, 170);
a plurality of temperature sensors (230, 240, 250, 260) for detecting refrigerant inlet and outlet temperatures of the first and second evaporators (160, 170); and
a control unit (200) configured to recognize whether the refrigerant is concentrated into one side of the first or second evaporator (160, 170) on the basis of at least one information of the information with respect to the refrigerant inlet and outlet temperatures of the first evaporator (160) and the information with respect to the refrigerant inlet and outlet temperatures of the second evaporator (170).

7. The refrigerator (10, 10a, 10b, 10c) according to claim 6, wherein the control unit (200) is configured to reduce the rotation number of the second evaporation fan (175) and to increase or maintain the rotation number of the first evaporation fan (165) when the refrigeration concentration into the first evaporator (160) is recognized.

8. A method of controlling a refrigerator (10, 10a, 10b, 10c) comprising a compressor (111, 115), a condenser (120), an expansion devices (141, 143, 145, 147, 241, 243), and first and second evaporators (160, 170), the method comprising:
operating the compressor (111, 115); and
applying (S12) a preset pulse value into a plurality of condensation fans (121, 122) for blowing air into the condenser (120) and operating the plurality of condensation fans (121, 122);
detecting (S13) a rotation number of each of the plurality of condensation fans (121, 122); and
maintaining (S15) the preset pulse value when the rotation numbers of the plurality of condensation fans (121, 122) are the same, or the difference between the rotation numbers of the plurality of condensation fans (121, 122) is within the preset value, and
increasing the rotation number of the condensation fan (121, 122) having a lower rotation number when the difference between the rotation numbers of the plurality of condensation fans (121, 122) is above a preset value.

9. The method according to claim 8, further comprising:
operating a first evaporation fan (165) disposed on one side of the first evaporator (160) and a second evaporation fan (175) disposed on one side of the second evaporator (170) at a preset rate to supply cool air into a refrigerating compartment and a freezing compartment; and
changing (S31, S52, S72, S92) an operation rate of the first or second evaporation fan (165, 175) on the basis of whether concentration of a refrigerant into the first or second evaporator (160, 170) occurs.

10. The method according to claim 8, wherein the refrigerant is branched to flow into the first and second evaporators (160, 170), and
the changing (S33, S34, S56, S76, S95) of the operation rate comprises decreasing the operation rate of the second evaporation fan (175) and maintaining or increasing the operation rate of the first evaporation fan (165) when the concentration of the refrigerant into the first evaporator (160) occurs.

## Patentansprüche

1. Kühlschrank (10, 10a, 10b, 10c), der aufweist:
einen Maschinenraum (101), der an einer Seite eines Aufbewahrungsraums angeordnet ist;
eine Basis (105), die eine Bodenfläche des Maschinenraums (101) bildet;
einen auf der Basis (105) angeordneten Verdichter (111, 115) zum Komprimieren eines Kältemittels;
einen Kondensator (120) zum Kondensieren des in dem Verdichter (111, 115) komprimierten Kältemittels, wobei der Kondensator (120) an einer Seite des Verdichters (111, 115) angeordnet ist;
eine Abtropfschale (125), die auf der Basis (105) angeordnet ist und geeignet ist, in dem Kondensator (120) erzeugtes Kondenswasser aufzunehmen;
eine Ventilatoranordnung (130), die mit der Basis (105) verbunden ist und geeignet ist, einen Luftstrom in dem Maschinenraum (101) zu erzeugen, wobei die Ventilatoranordnung (130) mehrere Kondensationsventilatoren (121, 122) aufweist; und
eine Steuereinheit (200) zum Bereitstellen eines elektrischen Signals, das den mehreren Kondensationsventilatoren (121, 122) erlaubt, einen Sollwert zu steuern, der einen in die mehreren Kondensationsventilatoren (121, 122) eingegebenen Pulswert definiert;
**dadurch gekennzeichnet, dass**
der Verdichter (111, 115) aufweist: einen ersten Verdichter (111) zum hauptsächlichen Komprimieren des Kältemittels und einen zweiten Verdichter (115) zum zusätzlichen Komprimieren des in dem ersten Verdichter (111) komprimierten Kältemittels,
die Ventilatoranordnung (130) aufweist: einen ersten Kondensationsventilator (121) und einen zweiten Kondensationsventilator (122), der mit einer Seite des ersten Kondensationsventilators (121) gekoppelt ist,
der erste Verdichter (111) und der erste Kondensationsventilator (121) eine erste Reihe bilden und
der zweite Verdichter (115) und der zweite Kondensationsventilator (122) eine zweite Reihe bilden,
der Kühlschrank desweiteren eine Drehzahl-Detektionseinheit (210, 220) zum Detektieren einer Drehzahl sowohl des ersten wie auch des zweiten Kondensationsventilators (121, 122) aufweist, und
die Steuereinheit (200) konfiguriert ist, auf Basis der Information, die die detektierte Drehzahl betrifft, die Drehzahl sowohl des ersten wie auch des zweiten Kondensationsventilators (121, 122) zu steuern, derart, dass die Drehzahlen des ersten und zweiten Kondensationsventilators (121, 122) gleich sind.

2. Kühlschrank (10, 10a, 10b, 10c) nach Anspruch 1, wobei die Ventilatoranordnung (130) in einem vorgegebenen Abstand von der Abtropfschale (125) angeordnet ist.

3. Kühlschrank (10, 10a, 10b, 10c) nach Anspruch 2, wobei der vorgegebene Abstand zwischen ungefähr 20mm und ungefähr 40mm beträgt.

4. Kühlschrank (10, 10a, 10b, 10c) nach Anspruch 1, wobei eine Breite der Ventilatoranordnung (130) in eine Richtung größer ist als diejenige des Kondensators (120) in eine Richtung, und
der erste und der zweite Kondensationsventilator (121, 122) an einer Seite des Kondensators (120) und parallel zueinander angeordnet sind.

5. Kühlschrank (10, 10a, 10b, 10c) nach einem der Ansprüche 1 bis 4, wobei die Steuereinheit (200) konfiguriert ist, einen vorgegebenen Sollwert in die mehreren Kondensationsventilatoren (121,122) einzugeben, wobei
wenn die mehreren Kondensationsventilatoren (121, 122) die gleiche Drehzahl haben oder eine Differenz der Drehzahlen der mehreren Kondensationsventilatoren (121, 122) innerhalb eines vorgegebenen Werts ist, der vorgegebene Sollwert beibehalten wird, und
wenn die Differenz der Drehzahlen der mehreren Kondensationsventilatoren (121, 122) größer als der vorgegebene Wert ist, der Sollwert des Kondensationsventilators, der eine kleinere Drehzahl hat, geändert wird.

6. Kühlschrank (10, 10a, 10b, 10c) nach einem der Ansprüche 1 bis 5, ferner mit:
mehreren Verdampfern (160, 170), die einen ersten und zweiten Verdampfer (160, 170) zum Verdampfen des Kältemittels aufweisen;
mehreren Verdampferventilatoren (165, 175), die einen ersten und zweiten Verdampferventilator (165, 175) aufweisen, die jeweils an einer Seite des ersten und zweiten Verdampfers (160, 170) angeordnet sind;
mehreren Temperatursensoren (230, 240, 250, 260) zum Detektieren von Kältemitteltemperaturen am Einlass und Auslass des ersten und zweiten Verdampfers (160, 170); und
einer Steuereinheit (200), die konfiguriert ist, auf Basis einer Information, die die Kältemitteltemperaturen am Einlass und Auslass des ersten Verdampfers (160) betrifft, und/oder einer Information, die die Kältemitteltemperaturen am Einlass und Auslass des zweiten Verdampfers (170) betrifft, zu erkennen, ob das Kältemittel in einer Seite des ersten oder zweiten Verdampfers (160, 170) konzentriert ist.

7. Kühlschrank (10, 10a, 10b, 10c) nach Anspruch 6, wobei die Steuereinheit (200) konfiguriert ist, die Drehzahl des zweiten Verdampferventilators (175) zu verringern und die Drehzahl des ersten Verdampferventilators (165) zu erhöhen oder beizubehalten, wenn eine Kältemittelkonzentration in dem ersten Verdampfer (160) erkannt wird.

8. Verfahren zur Steuerung eines Kühlschranks (10, 10a, 10b, 10c), der einen Verdichter (111, 115), einen Kondensator (120), eine Expansionsvorrichtung (141, 143, 145, 147, 241, 243) und einen ersten und zweiten Verdampfer (160, 170) aufweist, wobei das Verfahren aufweist:
Betreiben des Verdichters (111, 115); und
Eingeben (S 12) eines vorgegebenen Pulswerts in mehrere Kondensationsventilatoren (121, 122) zum Einblasen von Luft in den Kondensator (120) und Betreiben der mehreren Kondensationsventilatoren (121, 122);
Detektieren (S13) einer Drehzahl jedes der mehreren Kondensationsventilatoren (121, 122); und
Beibehalten (S 15) des vorgegebenen Pulswerts, wenn die Drehzahlen der mehreren Kondensationsventilatoren (121, 122) gleich sind oder die Differenz der Drehzahlen der mehreren Kondensationsventilatoren (121, 122) innerhalb eines vorgegebenen Werts ist, und
Erhöhen der Drehzahl des Kondensationsventilators (121, 122), der eine kleinere Drehzahl hat, wenn die Differenz der Drehzahlen der mehreren Kondensationsventilatoren (121, 122) größer als ein vorgegebener Wert ist.

9. Verfahren nach Anspruch 8, ferner mit:
Betreiben eines ersten Verdampferventilators (165), der an einer Seite des ersten Verdampfers (160) angeordnet ist, und eines zweiten Verdampferventilators (175), der an einer Seite des zweiten Verdampfers (170) angeordnet ist, mit einer vorgegebenen Rate, um einem Kühlraum und einem Gefrierraum kühle Luft zuzuführen; und
Ändern (S31, S52, S72, S92) einer Betriebsrate des ersten oder zweiten Verdampferventilators (165, 175) auf Basis dessen, ob eine Konzentration von Kältemittel in dem ersten oder zweiten Verdampfer (160, 170) auftritt.

10. Verfahren nach Anspruch 8, wobei das Kältemittel verzweigt wird, um es in den ersten und zweiten Verdampfer (160, 170) strömen zu lassen, und
das Ändern (S33, S34, S56, S76, S95) der Betriebsrate aufweist: Verringern der Betriebsrate des zweiten Verdampferventilators (175) und Beibehalten oder Erhöhen der Betriebsrate des ersten Verdampferventilators (165) bei Auftreten einer Konzentration von Kältemittel in dem ersten Verdampfer (160).

## Revendications

1. Réfrigérateur (10, 10a, 10b, 10c) comprenant :
un espace machine (101) défini d'un côté défini d'un compartiment de stockage ;
une base (105) définissant une surface inférieure de l'espace machine (101) ;
un compresseur (111, 115) reposant sur la base (105) pour la compression d'un réfrigérant ;
un condenseur (120) pour la condensation du réfrigérant comprimé dans le compresseur (111, 115), le condenseur (120) étant disposé d'un côté du compresseur (111, 115) ;
un bac d'évacuation (125) disposé sur la base (105) et adapté pour stocker de l'eau condensée générée dans le condenseur (120) ;
un ensemble de ventilateurs (130) couplé à la base (105) et adapté pour générer un écoulement d'air dans l'espace machine (101),
dans lequel l'ensemble de ventilateurs (130) comprend une pluralité de ventilateurs de condensation (121, 122) ; et
une unité de commande (200) pour l'application d'un signal électrique afin de permettre à la pluralité de ventilateurs de condensation (121, 122) de commander une valeur nominale qui définit une valeur d'impulsion appliquée à la pluralité de ventilateurs de condensation (121, 122) ;
**caractérisé en ce que** :
le compresseur (111, 115) comprend un premier compresseur (111) principalement pour la compression du réfrigérant et un second compresseur (115) pour la compression additionnelle du réfrigérant comprimé dans le premier compresseur (111),
l'ensemble de ventilateurs (130) comprend un premier ventilateur de condensation (121) et un second ventilateur de condensation (122) couplé à un côté du premier ventilateur de condensation (121),
le premier compresseur (111) et le premier ventilateur de condensation (121) forment une première rangée et
le second compresseur (115) et le second ventilateur de condensation (122) forment une seconde rangée,
le réfrigérateur comprend en outre une unité de détection de nombre de tours (210, 220) pour la détection du nombre de tours de chacun des premier et second ventilateurs de condensation (121, 122), et
l'unité de commande (200) est configurée pour commander le nombre de tours de chacun des premier et second ventilateurs de condensation (121, 122) de sorte que les nombres de tours des premier et second ventilateurs de condensation (121, 122) sont identiques l'un à l'autre sur la base des informations concernant le nombre de tours détecté.

2. Réfrigérateur (10, 10a, 10b, 10c) selon la revendication 1, dans lequel l'ensemble de ventilateurs (130) est espacé d'une distance préétablie vers l'extérieur du bac d'évacuation (125).

3. Réfrigérateur (10, 10a, 10b, 10c) selon la revendication 2, dans lequel la distance préétablie se situe dans une plage d'environ 20 mm à environ 40 mm.

4. Réfrigérateur (10, 10a, 10b, 10c) selon la revendication 1, dans lequel la largeur de l'ensemble de ventilateurs (130) dans une direction est supérieure à celle du condenseur (120) dans une direction, et
les premier et second ventilateurs de condensation (121, 122) sont disposés d'un côté du condenseur (120) parallèlement l'un à l'autre.

5. Réfrigérateur (10, 10a, 10b, 10c) selon l'une quelconque des revendications 1 à 4, dans lequel l'unité de commande (200) est configurée pour saisir une valeur nominale préétablie dans la pluralité de ventilateurs de condensation (121, 122), lorsque la pluralité de ventilateurs de condensation (121, 122) ont le même nombre de tours ou qu'une différence entre le nombre de tours de la pluralité de ventilateurs de condensation (121, 122) se situe dans une valeur préétablie, la valeur nominale préétablie est maintenue, et
lorsque la différence entre les nombres de tour de la pluralité de ventilateurs de condensation (121, 122) se situe au-dessus de la valeur préétablie, la valeur nominale du ventilateur de condensation ayant un nombre de tours inférieur est modifiée.

6. Réfrigérateur (10, 10a, 10b 10c) selon l'une quelconque des revendications 1 à 5, comprenant en outre :
une pluralité d'évaporateurs (160, 170) comprenant des premier et second évaporateurs (160, 170) pour l'évaporation du réfrigérant ;
une pluralité de ventilateurs d'évaporation (165, 175) comprenant des premier et
second ventilateurs d'évaporation (165, 175) qui sont respectivement disposés d'un côté des premier et second évaporateurs (160, 170) ;
une pluralité de capteurs de température (230, 240, 250, 260) pour la détecter des températures d'entrée et de sortie de réfrigérant des premier et second évaporateurs (160, 170) ; et
une unité de commande (200) configurée pour reconnaître si le réfrigérant est concentré d'un côté du premier ou du second évaporateur (160, 170) sur la base d'au moins une information parmi les informations concernant les températures d'entrée et de sortie de réfrigérant du premier évaporateur (160) et les informations concernant les températures d'entrée et de sortie de réfrigérant du second évaporateur (170).

7. Réfrigérateur (10, 10a, 10b 10c) selon la revendication 6, dans lequel l'unité de commande (200) est configurée pour réduire le nombre de tours du second ventilateur d'évaporation (175) et pour augmenter ou maintenir le nombre de tours du premier ventilateur d'évaporation (165) lorsque la concentration de réfrigération dans le premier évaporateur (160) est reconnue.

8. Procédé de commande d'un réfrigérateur (10, 10a, 10b 10c) comprenant un compresseur (111, 115), un condenseur (120), des dispositifs d'expansion (141, 143, 145, 147, 241, 243) et des premier et second évaporateurs (160, 170), le procédé comprenant :
la mise en service du compresseur (111, 115) ; et
l'application (S 12) d'une valeur d'impulsion préétablie dans une pluralité de ventilateurs de condensation (121, 122) pour souffler de l'air dans le condenseur (120) et mettre en service la pluralité de ventilateurs de condensation (121, 122) ;
la détection (S 13) d'un nombre de tours de chacun de la pluralité de ventilateurs de condensation (121, 122) ; et
le maintien (S 15) de la valeur d'impulsion préétablie lorsque les nombres de tours de la pluralité de ventilateurs de condensation (121, 122) sont les mêmes ou que la différence entre les nombres de tours de la pluralité de ventilateurs de condensation (121, 122) se situe dans la valeur préétablie, et
l'augmentation du nombre de tours du ventilateur de condensation (121, 122) ayant un nombre de tours inférieur lorsque la différence entre les nombres de tours de la pluralité de ventilateurs de condensation (121, 122) se situe au-dessus d'une valeur préétablie.

9. Procédé selon la revendication 8, comprenant en outre :
la mise en service d'un premier ventilateur d'évaporation (165) disposé d'un côté du premier évaporateur (160) et d'un second ventilateur d'évaporation (175) disposé d'un côté du second évaporateur (170) à un débit préétabli pour fournir de l'air frais dans un compartiment de réfrigération et dans un compartiment de congélation ; et
le changement (S31, S52, S72, S92) d'un débit de fonctionnement du premier ou second ventilateur d'évaporation (165, 175) sur la base du fait qu'une concentration d'un réfrigérant dans le premier ou le second évaporateur (160, 170) se produise ou non.

10. Procédé selon la revendication 8, dans lequel le réfrigérant est ramifié pour s'écouler dans les premier et second évaporateurs (160, 170) et
le changement (S33, S34, S56, S76, S95) du débit de fonctionnement comprend la diminution du débit de fonctionnement du second ventilateur d'évaporation (175) et le maintien ou l'augmentation du débit de fonctionnement du premier ventilateur d'évaporation (165) lorsque la concentration du réfrigérant dans le premier évaporateur (160) se produit.
